(19) Europäisches Patentamt / European Patent Office / Office européen des brevets

(11) **EP 3 646 693 B1**

(12) **EUROPEAN PATENT SPECIFICATION**

(45) Date of publication and mention
of the grant of the patent:
**24.04.2024 Bulletin 2024/17**

(21) Application number: **18824419.8**

(22) Date of filing: **18.05.2018**

(51) International Patent Classification (IPC):
**A01C 17/00** (2006.01)

(52) Cooperative Patent Classification (CPC):
**A01C 17/005; A01C 17/001; A01C 17/008**

(86) International application number:
**PCT/JP2018/019387**

(87) International publication number:
**WO 2019/003714 (03.01.2019 Gazette 2019/01)**

(54) **SCATTERING DEVICE**

STREUGERÄT

DISPOSITIF DE DISPERSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2017 JP 2017126722
28.06.2017 JP 2017126723**

(43) Date of publication of application:
**06.05.2020 Bulletin 2020/19**

(73) Proprietor: **Kubota Corporation
Osaka-shi, Osaka 556-8601 (JP)**

(72) Inventors:
• **NAKAGAWA, Takao
Sakai-shi, Osaka 590-0823 (JP)**
• **YAGYU, Sumio
Sakai-shi, Osaka 590-0823 (JP)**
• **KAWANE, Masaru
Sakai-shi, Osaka 590-0823 (JP)**

(74) Representative: **Cabinet Beau de Loménie
158, rue de l'Université
75340 Paris Cedex 07 (FR)**

(56) References cited:
| | |
|---|---|
| EP-A1- 0 504 720 | EP-A2- 0 048 465 |
| DE-A1- 2 843 487 | DE-A1- 10 145 927 |
| DE-A1- 19 746 530 | GB-A- 2 150 403 |
| GB-A- 2 163 032 | JP-A- H07 327 435 |
| JP-A- 2006 158 306 | JP-A- 2008 301 795 |
| JP-A- 2012 085 566 | JP-A- 2012 139 177 |

**Description**

The present invention relates to a spreader device for spreading spread substance such as fertilizer on an agricultural field or the like.

[BACKGROUND ART]

A spreader device disclosed in Patent Document 1 is previously known.

The spreader device disclosed in Patent Document 1 includes a container portion (a hopper) that is provided behind the traveling vehicle and contains the spread substance such as fertilizer, two rotors (rotors) that spread the spread substance contained in the container portion, and a motor for driving the two rotors.

Patent Document 2 describes a method and apparatus for spreading fertilizers, Patent Document 3 describes a fertilizer broadcaster and Patent Document 4 describes a spreader vehicle for solid and liquid thawing materials and discloses the preamble of claim 1.

[RELATED ART DOCUMENTS]

[PATENT DOCUMENTS]

[Patent Document 1] Japanese Unexamined Patent Application Publication No. 2013-46601
[Patent Document 2] British Patent Application Publication No 2 150 403
[Patent Document 3] European Patent Application Publication No 0 504 720
[Patent Document 4] European Patent Application Publication No 0 048 465

[DISCLOSURE OF THE INVENTION]

[PROBLEMS TO BE SOLVED BY THE INVENTION]

In the spreader device of Patent Document 1, since the spreading of the spread substance is performed using two rotors, the spreading pattern of the spread substance is restricted. For this reason, it is difficult to realize an optimal spreading pattern according to the shape of the field, the position of the spreader device, the planting position of the crop, and the like.

In view of the problems mentioned above, the present invention intends to provide a spreader device capable of realizing an optimal spreading pattern in accordance with a shape of agricultural field, a position of the spreader device, a planting position of crops, and the like.

[MEANS OF SOLVING THE PROBLEMS]

In order to achieve the object described above, the present invention provides the following technical configurations.

(Cancelled)

(Cancelled)

(Cancelled)

(Cancelled)

A spreader device according to the present invention is defined in claim 1.

(Cancelled)

Preferably, the first driving-force transmission portion includes a driving-force switch portion configured to: block transmitting the driving force to the third rotor when a rotating speed of the first driver source is equal to a rotating speed of the second driver source; and transmit the driving force to the third rotor when the rotating speed of the first driver source is different from the rotating speed of the second driver source.

Preferably, the driving-force transmission mechanism drives the third rotor based on a difference between the rotating speed of the first driver source and the rotating speed of the second driver source when the rotating speed of the first driver source is different from the rotating speed of the second driver source and in addition when the third driver source is stopped, and drives the third rotor based on a difference between (i) a rotating speed of the third driver source and (ii) the difference between the rotating speed of the first driver source and the rotating speed of the second driver source when the rotating speed of the first driver source is different from the rotating speed of the second driver source and in addition when the third driver source is driven.

Preferably, the driving-force switch portion includes a planetary gear mechanism having: a first sun gear to which the driving force of the first driver source; a first planetary gear engaged with the first sun gear; a first planetary carrier to which the driving force of the second driver source is transmitted, the first planetary carrier supporting the first planetary gear; and a first inner gear engaged with the first planetary gear. A gear ratio of the planetary gear mechanism is equivalent to a ratio between a rotating speed of the first sun gear rotated by the first driver source and a rotating speed of the second sun gear rotated by the second driver source.

Preferably, the driving-force switch portion includes a second inner gear configured to be rotated integrally with the first inner gear. The third driving-force transmission portion includes: a second planetary gear engaged with the second inner gear; and a second planetary carrier supporting the second planetary gear, the second planetary carrier being configured to be rotated integrally with the third rotor. The second driving-force transmission portion includes a second sun gear to which the driving force of the third driver source is transmitted, the second sun gear being engaged with the second planetary gear.

[EFFECTS OF THE INVENTION]

According to the spreader device, an optimal spreading pattern is realized in accordance with a shape of agricultural field, a position of a spreader device, a planting position of crops, and the like.

[BRIEF DESCRIPTION OF THE DRAWINGS]

FIG. 1 is a side view of a spreader machine according to embodiments of the present invention.
FIG. 2 is a planar view of the spreader machine according to the embodiments.
FIG. 3 is a side view of a spreader device according to the embodiments.
FIG. 4 is a bottom view of the spreader device according to the embodiments.
FIG. 5 is a view illustrating a driver portion including a driving-force transmission mechanism according to a first embodiment of the present invention.
FIG. 6 is a view illustrating a driver portion including a driving-force transmission mechanism according to a second embodiment of the present invention.
FIG. 7 is a view illustrating a driver portion including a driving-force transmission mechanism according to a third embodiment of the present invention.
FIG. 8 is a view illustrating a table representing an example of a relation between rotating speeds of a motor (a driver source), a rotor, a first shaft, a second shaft, and an inner gear according to the embodiments.
FIG. 9 is a view illustrating another table representing an example of a relation between the rotating speeds of the motor (the driver source), the rotor, the first shaft, the second shaft, and the inner gear according to the embodiments.
FIG. 10 is a block diagram illustrating a control system including a controller portion according to the first embodiment.
FIG. 11 is a block diagram illustrating a control system including a controller portion according to the second embodiment.
FIG. 12 is a planar view illustrating an example of a spreading method by the spreader device according to the embodiments.
FIG. 13 is a planar view illustrating an example of a spreading pattern according to the embodiments.

[BEST MODE FOR CARRYING OUT THE INVENTION]

Hereinafter, embodiments of the present invention will be described with reference to the drawings.

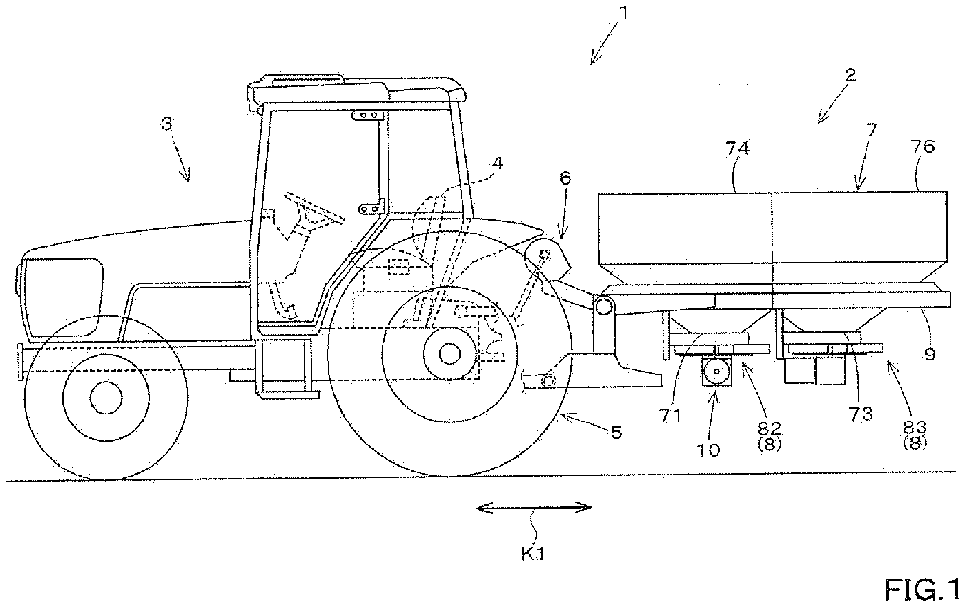

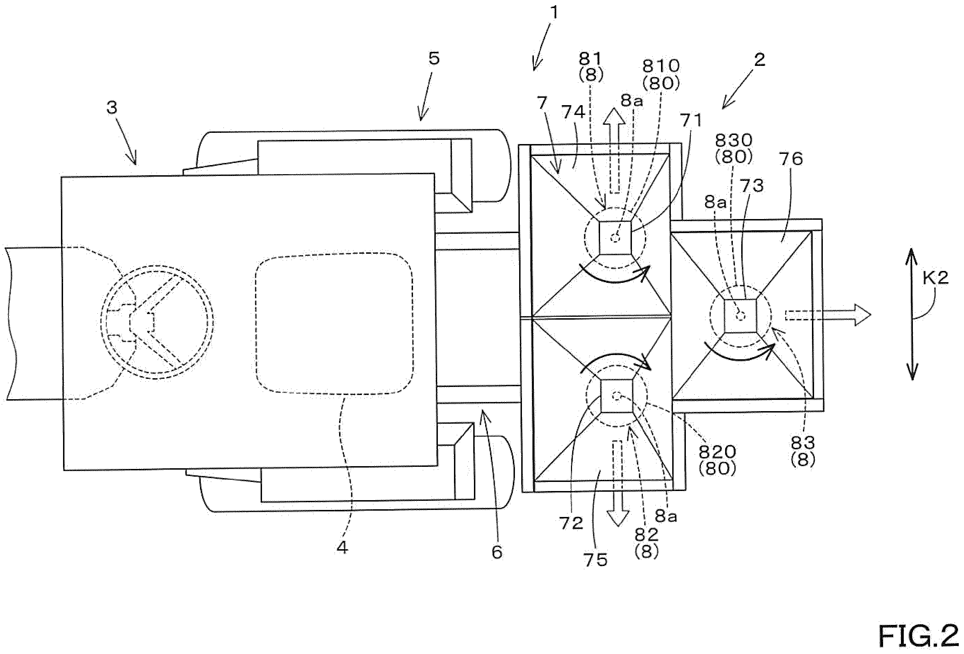

FIG. 1 and FIG. 2 show a spreader machine 1 provided with a spreader device 2 according to an embodiment of the present invention. The spreader machine 1 includes the spreader device 2 and a traveling vehicle 3.

The spreader device 2 spreads spread substance such as fertilizers and chemicals on the agricultural field (farm). The traveling vehicle 3 is a vehicle configured to travel while pulling the spreader device 2. Although the type of traveling vehicle 3 is not limited, the traveling vehicle 3 is a tractor in the embodiment. The spreader device 2 may be configured to travel independently without being pulled by the traveling vehicle 3.

The tractor (the traveling vehicle) 3 includes an operator seat 4, a traveling device 5, and a coupling device 6. In the embodiment of the present invention, the front side of an operator seated on the operator seat 4 (the left side in FIG. 1) is referred to as the front, the rear side of the operator (the right side in FIG. 1) is referred to as the rear, the left side of the operator (a front surface side of FIG. 1) is referred to as the left, and the right side of the operator (a back surface side of FIG. 1) is referred to as the right. In addition, the horizontal direction K2 (see FIG. 2), which is a direction orthogonal to the front-rear direction K1 (see FIG. 1), will be described as the vehicle width direction.

The traveling device 5 is a four-wheel drive type constituted of a front wheel and a rear wheel in the present embodiment, but may be a crawler type traveling device.

The coupling device 6 is provided at the rear portion of the tractor 3. The coupling device 6 is composed of a three-point linkage mechanism or the like. The spreader device 2 is detachably connected to the coupling device 6.

As shown in FIG. 1 to FIG. 4, the spreader device 2 includes a storage portion 7 and a spreader portion 8.

The container portion 7 accommodates the spread substance spread on a farm field.

As shown in FIG. 1 to FIG. 4, the container portion 7 is constituted of a hopper having a substantially-inverted pyramid shape.

The container portion 7 has a charging inlet for the spread substance at the upper end portion and has a take-out outlet for taking out the contained spread substance at the lower end portion. In the case of this embodiment, the number of the take-out outlets is the same as the number of rotors 80 described later. In particular, since the number of rotors 80 is three, the number of the take-out outlets is also three. Hereinafter, for convenience of the description, the three take-out outlets are respectively referred to as a first outlet 71, a second outlet 72, and a third outlet 73. However, the number of the take-out outlets may be different from the number of the rotors 80, for example, one take-out outlet may be provided for a plurality of the rotors 80. In this case, the spread substance taken out from one outlet is distributed and supplied to each of the plurality of rotors 80.

The hopper constituting the container portion 7 may be a hopper provided with a plurality of take-out outlets (one charging inlet and a plurality of take-out outlets), may be a plurality of hoppers each provided with an take-out outlet, may be a plurality of hoppers provided with a single take-out outlet (a plurality of charging inlets and one take-out outlet).

For example, when the number of take-out outlets is three, the three outlets may be provided in one hopper, three hoppers having one take-out outlet may be provided, or one hopper having two take-out outlets and one hopper having one take-out outlet may be provided. When the number of take-out outlets is one, for example, one take-out outlet shared with three hoppers may be provided.

When three take-out outlets (the first outlet 71, the second outlet 72, and the third outlet 73) are provided, at least one of the three take-out outlets (for example, the third outlet 73) is preferably provided in a hopper other than the hopper having the other take-out outlets (for example, the first outlet 71 and the second outlet 72). In other words, it is preferred that at least one hopper (for example, the third hopper 75) is configured to be able to supply and take out the spread substance independently from the other hoppers (for example, the first hopper 73 and the second hopper 74). With that configuration, it is possible to take out and spread the spread substance different from the spread substance of the other take-out outlets from at least one outlet.

In this embodiment, the container portion 7 is provided with three hoppers each having a take-out outlet (three charging inlets and three take-out outlets). That is, the container portion 7 is constituted of a first hopper 74 having the first outlet 71, a second hopper 75 having the second outlet 72, and a third hopper 76 having the third outlet 73. In this manner, different spread substances can be contained separately in the first hopper 74, the second hopper 75, and the third hopper 76, and the different spread substances can be taken out and spread separately from each of the take-out outlets (the first outlet 71, the second outlet 72, and the third outlet 73).

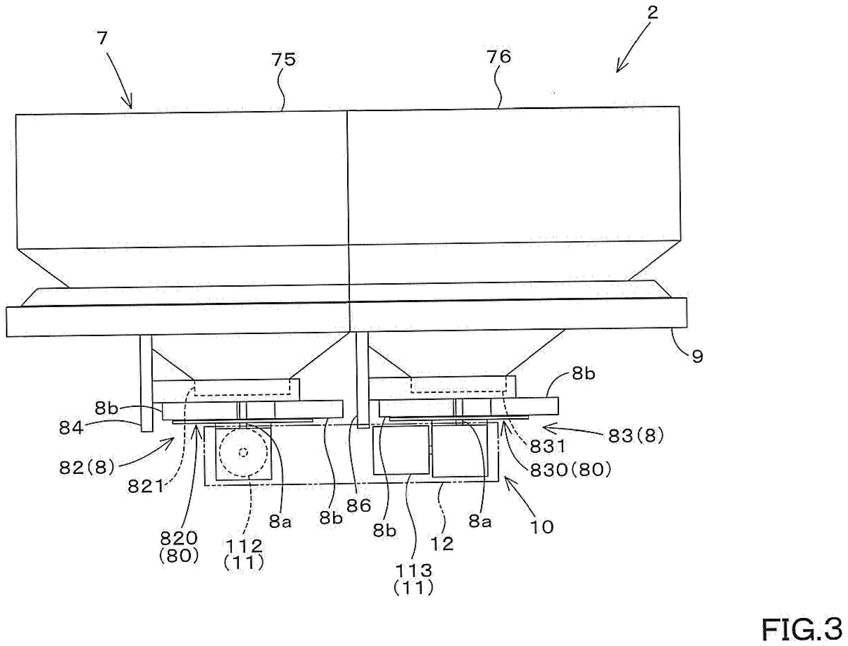

The spreader portion 8 spreads the spread substance contained in the container portion 7. As shown in FIG. 1, FIG. 3, and the like, the spreader portion 8 is provided below the container portion 7.

The spreader portion 8 includes at least three spreader portions. At least three spreader portions 8 each have different spreading directions. However, at least three spreader portions 8 may include two or more spreader portions having the same spreading direction.

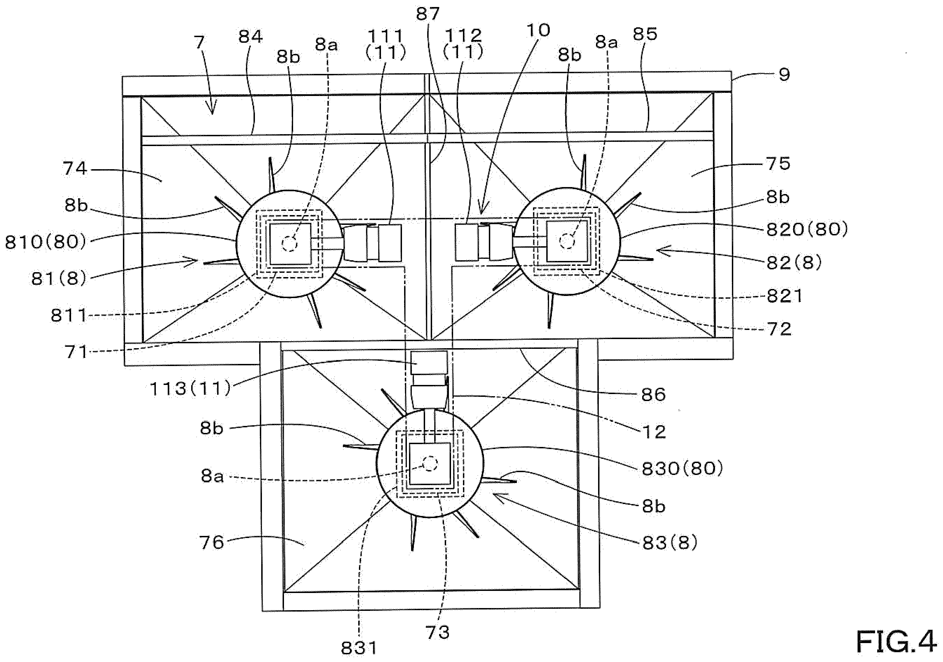

As shown in FIG. 2 and FIG. 4, in the case of the present embodiment, the spreader portion 8 includes a first spreader portion 81, a second spreader portion 82, and a third spreader portion 83. That is, in the embodiment, the number of the spreader portions 8 is three. Hereinafter, the case where the number of the spreader portions 8 is three will be described as an example, but the number of the spreader portions 8 is not limited to three and may be four or more.

FIG. 2 and FIG. 4, the first spreader portion 81 and the second spreader portion 82 are provided side by side in the width direction (the vehicle width direction) of the traveling vehicle 3. The third spreader portion 83 is provided behind the first spreader portion 81 and the second spreader portion 82 at the center in the vehicle width direction.

Hereinafter, for convenience of the explanation, the three spreader portions 8 will be described in the order of the second spreader portion 82, the third spreader portion 83, and the first spreader portion 81.

As shown in FIG. 3 and FIG. 4, the second spreader portion 82 includes a second rotor 820 and a second shutter device 821.

The second rotor 820 has a disk shape and rotates around a center axis 8a extending in the vertical direction (in a perpendicular direction). A plurality of blade members 8b are attached to the upper surface of the second rotor 820. The plurality of blade members 8b are arranged at intervals in the circumferential direction, and extend in the radially outward direction from the vicinity of the center shaft 8a. The second rotor 820 rotates around the center axis 8a, so that the spread substance that has fallen from the second outlet 72 strikes the blade member 8b to be spread outward (radially outward).

The second shutter device 821 has a shutter and an electric motor (not shown in the drawings). The shutter is attached to the second outlet 72 of the container portion 7, and is capable of moving to change the area (an opening aperture) of the second outlet 72. The electric motor is a stepping motor or the like, and is connected to the shutter. The second shutter device 821 moves the shutter due to the driving of the electric motor and thereby changes the opening aperture of the second outlet 72. In this manner, the spreading amount of the spread substance is adjusted by the second spreader portion 82.

As shown in FIG. 3 and FIG. 4, the third spreader portion 83 includes a third rotor 830 and a third shutter device 831. Since the configuration of the third rotary body 830 is the same as that of the second rotary body 820, the description is omitted.

The configuration of the third shutter device 831 is the same as that of the second shutter device 821 except that the shutter is attached to the third outlet 72. The third shutter device 831 is configured to change the opening aperture of the third outlet 73 and thereby adjust the spread amount of the spread substance spread by the third spreader portion 83.

As shown in FIG. 4, the first spreader portion 81 includes the first rotor 810 and the first shutter device 811. Since the configuration of the first rotary body 810 is the same as that of the second rotary body 820, the description is omitted.

The configuration of the first shutter device 811 is the same as that of the second shutter device 821 except that the shutter is attached to the first outlet 71. The first shutter device 811 is configured to change the opening aperture of the first outlet 71, and thereby adjust the spread amount of the spread substance spread by the first spreader portion 81.

As shown in FIG. 2 and FIG. 4, the first rotor 810 and the second rotor 820 are arranged side by side in the width direction (in the vehicle width direction) of the traveling vehicle 3. In other words, the first rotor 810 and the second rotor 820 are arranged at the same position in the front-rear direction, and are arranged at different positions in the vehicle width direction.

The third rotor 830 is provided behind the first rotor 810 and the second rotor 820 at the center in the vehicle width direction. However, the position of the third rotator 830 in the vehicle width direction is not limited to the center in the vehicle width direction, and may be located between the first rotator 810 and the second rotator 820. In particular, the center axis of the third rotator 830 may be positioned between the center axis of the first rotator 810 and the center axis of the second rotator 820 in the vehicle width direction.

As shown in FIG. 2, the first rotor 810 and the second rotor 820 rotate in different directions. The third rotator 830 rotates in the direction same as directions in which the first rotator 810 or the second rotator 820 rotate. In the present embodiment, as indicated by the black arrowed line in FIG. 2, the first rotor 810 rotates counterclockwise in a planar view, the second rotor 820 rotates clockwise in the planar view, and the rotor 830 rotates counterclockwise in the planar view.

The first rotor 810 is arranged below the first outlet 71 of the container portion 7. The spread substance that has fallen from the first outlet 71 is spread by the rotating first rotor 810. The second rotor 820 is arranged below the second outlet 72 of the container portion 7. The spread substance that has fallen from the second outlet 72 is spread by the rotating second rotor 820. The third rotor 830 is arranged below the third outlet 73 of the container portion 7. The spread substance that has fallen from the third outlet 73 is spread by the rotating third rotor 830.

The spreading directions of the first spreader portion 81, the second spreader portion 82, and the third spreader portion 83 are different from each other. The spreading direction of the first spreader portion 81 is one direction in the vehicle width direction. The spreading direction of the second spreader portion 82 is the other one direction in the vehicle width direction. The spreading direction of the third spreader portion 83 is a direction (preferably an orthogonal direction) intersecting with the vehicle width direction. As shown by the white arrowed line in FIG. 2, in the case of this embodiment, the spreading direction of the first spreader portion 81 is the right, the spreading direction of the second spreader portion 82 is the left, and the spreading direction of the third spreader portion 83 is the rear. Note that the direction indicated by the white arrowed line is the main spreading direction, and is actually spread in a fan shape around the direction indicated by the white arrowed line.

As shown in FIG. 4, the spreader portion 8 has a restrictor plate that restricts the spreading directions of the first spreader portion 81, the second spreader portion 82, and the third spreader portion 83. The restrictor plate includes a first restrictor plate 84, a second restrictor plate 85, a third restrictor plate 86, and a fourth restrictor plate 87. Each of the restrictor plates can be attached to a frame 9 or the like which will be described later.

The first restrictor plate 84 is provided in front of the first rotor 810 and extends in the vehicle width direction. The first restrictor plate 84 restricts (prevents) that the spread substance is spread forward by the rotating of the first rotor 810. The second restrictor plate 85 is provided in front of the second rotor 820 and extends in the vehicle width direction. The second restrictor plate 85 restricts the spread substance from being spread forward by the rotating of the second rotor 820. The third restrictor plate 86 is provided in front of the third rotor 830 and extends in the vehicle width direction. The third restrictor plate 86 restricts the spread substance from being spread forward by the rotating of the third rotor 830. The fourth restrictor plate 87 is provided between the first rotary body 810 and the second rotary body 820, and is extended in the front-back direction. The fourth restrictor plate 87 restricts the spread substance from being spread to the left by the rotating of the first rotor 810, and restricts the spread substance from being spread to the right by the rotating of the second rotor 820.

In this manner, the spreading direction due to the rotating of the first rotary body 810 is controlled by the first restrictor plate 84, the third restrictor plate 86, and the fourth restrictor plate 87, and is mainly the right. The spreading direction due to the rotating of the second rotor 820 is controlled by the second restrictor plate 85, the third restrictor plate 86, and the fourth restrictor plate 87, and is mainly the left. The spreading direction due to the rotation of the third rotor 830 is controlled by the third restrictor plate 86, and is mainly the rear.

In addition, as long as the restrictor plate can control (restrict) the spreading directions of the first spreader portion 81, the second spreader portion 82, and the third spreader portion 83 to be desired directions, any configuration (a position, a number, a shape, and an attachment structure, and the like) may be employed, and it is not limited to the configuration shown in FIG. 4.

In addition, the number of rotors is not limited to three. The number of the spreader portions 8 is at least three, and each spreader portion 8 has a rotor. Thus, when the number of the spreader portions 8 is four or more, the number of rotors is also four or more.

As described above, at least three or more spreader portions (the first spreader portion 81, the second spreader portion 82, and the third spreader portion 83 in the present embodiment) are each responsible for spreading in different directions. In this manner, uniform spreading to a farm field can be performed easily. In particular, when the first spreader portion 81 is responsible for spreading to the right, the second spreader portion 82 is responsible for spreading to the left, and the third spreader portion 83 is responsible for spreading the rear, uniform spreading on the farm field can be easily performed behind the traveling tractor 3. In this case, the rotating speeds of the first rotator 810 and the second rotator 820 are made faster than the rotating speed of the third rotator 830, so that the spread substance can be spread far from the tractor 3 to the left and to the right, and can be spread to a position close to the tractor 3 behind the tractor 3. In this manner, the uniform spreading on the farm field is achieved. The "rotating speed" is the number of rotations per unit time, and is also referred to as "rotation number". The rotating speed is expressed, for example, in units (rpm).

As shown in FIG. 1, FIG. 3, and FIG. 4, the spreader device 2 includes a frame (an attachment portion) 9.

The frame 9 supports the container portion 7, the spreader portion 8, and the driver portion 10.

As shown in FIG. 3 and FIG. 4, the frame 9 is attached around the hopper constituting the container portion 7. More specifically, the frame 9 is attached so as to surround the first hopper 74, the second hopper 75, and the third hopper 76. In this manner, the hopper which constitutes the container portion 7 is supported by the frame 9.

A support member (not shown in the drawings) is attached to the lower portion of the frame 9, and the spreader portion 8 and the driver portion 10 are supported below the container portion 7 by the support member.

As shown in FIG. 1 and FIG. 2, the front portion of the frame 9 is connected to a coupling device 6 provided at the rear portion of the tractor 3. In this manner, the spreading device 2 supported by the frame 9 is detachably attached to the rear portion of the tractor 3.

The configuration (a shape and the like) of the frame 9 is not limited to the configuration shown in FIG. 3 and FIG. 4, and may be configured to support the container portion 7, the spreader portion 8, and the driver portion 10, and to be connected to the coupling device 6.

As shown in FIG. 1, FIG. 3, and FIG. 4, the spreader device 2 includes the driver portion 10.

The driver portion 10 drives the rotors (the first rotor 810, the second rotor 820, and the third rotor 830) of the spreader portion 8.

As shown in FIG. 3 and FIG. 4, the driver portion 10 has a driver source 11. In the case of this embodiment, the driver source 11 is a motor. Thus, the driver source 11 will be described as the motor 11 below.

The motor 11 is an electric motor, and generates a driving force for rotating the rotors (the first rotor 810, the second rotor 820, and the third rotor 830).

The number of motors 11 is set corresponding to the number of spreader portions 8 (the number of rotors). In the embodiment, the number of the spreader portions 8 is three, and the number of the motors 11 is also three. When there are four or more spreader portions 8, the number of motors 11 can be four or more. In addition, the number of motors 11 may be smaller than the number of spreader portions 8 (for example, two or less).

In this embodiment, the motor (the driver source) 11 includes a first motor (a first driver source) 111, a second motor (a second driver source) 112, and a third motor (a third driver source) 113. The first motor 111 rotates the first rotor 810. The second motor 112 rotates the second rotor 820. The third motor 113 rotates the third rotator 830.

The outputs (rated outputs) of the first motor 111, the second motor 112, and the third motor 113 may all be the same, or one or two of them may be different. For example, the outputs of the first motor 111 and the second motor 112 may be the same, and the output of the third motor 113 may be smaller or larger than the outputs of the first motor 111 and the second motor 112.

In the driver portion 10, each of the motors (the first motor 111, the second motor 112, the third motor 113) may be configured to rotate independently each of the rotors (the first rotor 810, the second rotor 820, the third rotor 830 (hereinafter referred to as a "first configuration"), or at least two or more of the motors (the first motor 111, the second motor 112, and the third motor 113) may be configured to rotate synchronously each of the rotors (the first rotor 810, the second rotor 820, the third rotor 830 (hereinafter referred to as a "second configuration").

FIG. 3 and FIG. 4 show the driver portion 10 having the first configuration. The driver portion 10 is configured such that the first motor 111, the second motor 112, and the third motor 113 respectively rotate the first rotor 810, the second rotor 820, and the third rotor 830 independently. In particular, the first rotor 810 is rotated by the driving of the first motor 111, the second rotor 820 is rotated by the driving of the second motor 112, and the third rotor 830 is driven by the driving of the third motor 113. That is, the driving-force of the first motor 111 is used only for the rotating of the first rotor 810, the driving-force of the second motor 112 is used only for the rotating of the second rotor 820, and the driving-force of the third motor 113 is used only for rotating of the third rotor 830.

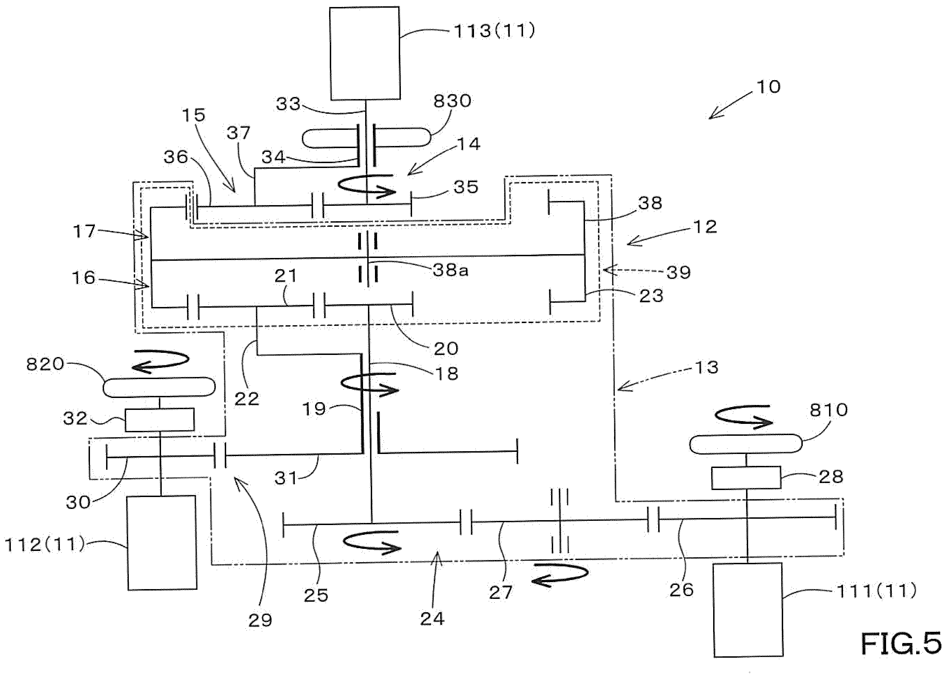

FIG. 5 to FIG. 7 show the driver portion 10 having the second configuration. The driver portion 10 includes the motor 11 and the driving-force transmission mechanism 12. The driver portion 10 shown in FIG. 5 to FIG. 7 includes driving-force transmission mechanisms 12 of different embodiments.

When the driver portion 10 of the second configuration is employed, the arrangement of the motor is different from that of the driver portion 10 having the first configuration by providing the driving-force transmission mechanism 12 to be described later. However, the illustration of the specific arrangement and the like of the motors is omitted. FIG. 3 and FIG. 4 show an example of a position where the driving-force transmission mechanism 12 is provided is indicated by an image line (two-dot chain line).

Hereinafter, the driving-force transmission mechanism 12 included in the driver portion 10 having the second configuration according to embodiments (the first embodiment to the third embodiment) will be described.

FIG. 5 shows the driver portion 10 including the driving-force transmission mechanism 12 according to the first embodiment.

The driving-force transmission mechanism 12 is a mechanism configured to transmit, to the third rotor 830, at least one of the driving force of the first motor 111 and the driving force of the second motor 112. The driving-force transmission mechanism 12 includes a first driving-force transmission portion 13, a second driving-force transmission portion 14, and a third driving-force transmission portion 15.

In the present embodiment, the driving-force transmission mechanism 12 includes a combined planetary gear mechanism. The combined planetary gear mechanism included in the driving-force transmission mechanism 12 will be described first, and then the first driving-force transmission portion 13, the second driving-force transmission portion 14, and the third driving-force transmission portion 15 will be described below.

The combined planetary gear mechanism included in the driving-force transmission mechanism 12 includes a first planetary gear mechanism 16 and a second planetary gear mechanism 17.

The first planetary gear mechanism 16 includes a first shaft 18, a second shaft 19, a first sun gear 20, a first planetary gear 21, a first planetary carrier 22, and a first inner gear 23.

The first sun gear 20 is engaged with the first planetary gear 21. The first planetary gear 21 is rotatably supported by the first planetary carrier 22, and is configured to rotate (revolve) around the first sun gear 20. The first planetary carrier 22 rotates in synchronization with the rotating (revolving) of the first planetary gear 21. The first inner gear 23 is engaged with the first planetary gear 21.

One end side of the first shaft 18 is connected to the center of the first sun gear 20. In this manner, the first shaft 18 rotates together with the first sun gear 20. A driving-force transmission mechanism (hereinafter referred to as a "first mechanism" for convenience of explanation) 24 configured to transmit the driving force of the first motor 111 to the first shaft 18 is connected to the other end side of the first shaft 18.

The first mechanism 24 includes a first gear 25, a second gear 26, and a third gear 27. In the present embodiment, the first gear 25, the second gear 26, and the third gear 27 are spur gears, but may be another type (another shape) of gear. The first gear 25 is connected to the other end side of the first shaft 18. The second gear 26 is connected to the rotation shaft of the first motor 111. The third gear 27 is engaged with the first gear 25 and with the second gear 26. The first gear 25, the second gear 26, and the third gear 27 have the same number of teeth.

In addition to being connected to the second gear 26, the rotation shaft of the first motor 111 is connected to the center shaft of the first rotor 810 through the first speed reducer 28. The first speed reducer 28 is constituted of, for example, a gear speed reducer, and reduces the rotational driving force inputted from the rotation shaft of the first motor 111 and transmits the reduced driving force to the center axis of the first rotor 810. In the case of this embodiment, the gear ratio (a reduction ratio) of the first reduction gear 28 is set to one-third. For example, when the rotation shaft of the first motor 111 rotates at 3000 rpm, the first rotor 810 rotates at 1000 rpm.

One end side of the second shaft 19 is connected to the first planetary carrier 22. In this manner, the second shaft 19 rotates together with the first planetary carrier 22. A driving-force transmission mechanism (hereinafter referred to as a "second mechanism") 29 configured to transmit the driving force of the second motor 112 to the second shaft 19 is connected to the other end side of the second shaft 19.

The second mechanism 29 has a fourth gear 30 and a fifth gear 31. The fourth gear 30 is connected to the rotation shaft of the second motor 112. The fifth gear 31 is connected to the other end side of the second shaft 19, and is engaged with the fourth gear 30. In the present embodiment, the fourth gear 30 and the fifth gear 31 are spur gears, but may be another type (another shape) of gear. The number of teeth of the fourth gear 30 is set to be smaller than the number of teeth of the fifth gear 31 (the number of teeth is one-third in this embodiment). The rotation direction of the second motor 112 is set to be opposite to the rotation direction of the first motor 111. That is, when the first motor 111 is rotated in the forward direction, the second motor 112 is rotated in the reverse direction.

In addition to being connected to the fourth gear 30, the rotation shaft of the second motor 112 is connected to the center axis of the second rotor 820 through the second reduction gear 32. The second speed reducer 32 is constituted of, for example, a gear speed reducer, and reduces the rotational driving force inputted from the second motor 112 and transmits the reduced driving force to the center axis of the second rotor 820. In the case of the present embodiment, the gear ratio (a reduction ratio) of the second reduction gear 32 is set to be one-third as with the first reduction gear 28. Thus, when the second motor 112 rotates at 3000 rpm for example, the second rotor 820 rotates at 1000 rpm.

The reduction ratio of the second mechanism 29 (the gear ratio between the fourth gear 30 and the fifth gear 31) and the reduction ratio of the second reduction gear 32 are set to be equal. In this manner, the second rotary body 820 and the second shaft 19 rotate at the same rotating speed. The ratio of the rotating speeds between the first shaft 18 and the second shaft 19 is set to be equal to the gear ratio of the first planetary gear mechanism 16 and the gear ratio of the second planetary gear mechanism 17 described later.

The second planetary gear mechanism 17 has the third shaft 33, the fourth shaft 34, the second sun gear 35, the second planetary gear 36, the second planetary carrier 37, and the second inner gear 38.

The second sun gear 35 is engaged with the second planetary gear 36. The second planetary gear 36 is rotatably supported by the second planetary carrier 37, and is configured to rotate (revolve) around the second sun gear 35. The second planetary carrier 37 rotates in synchronization with the rotating (revolving) of the second planetary gear 36. The second inner gear 38 is engaged with the second planetary gear 36.

The second sun gear 35 has the same shape as the first sun gear 20. The second planetary gear 36 has the same shape as the first planetary gear 21. The second inner gear 38 is coupled to the first inner gear 23, and rotates integrally with the first inner gear 23. The first inner gear 23 and the second inner gear 38 have the same shape, and are configured to rotate around a center axis 38a. The first inner gear 23 and the second inner gear 38 may be a combination of two inner gears, and may be integrally constituted of, on one inner surface of annular body, the teeth constituting the first inner gear 23 and the teeth constituting the second teeth.

One end side of the third shaft 33 is connected to the center of the second sun gear 35. In this manner, the third shaft 33 rotates together with the second sun gear 35. The rotation shaft of the third motor 113 is connected to the other end side of the third shaft 33.

The one end side of the fourth shaft 34 is connected to the second planetary carrier 37. The center shaft of the third rotor 830 is connected to the other end side of the fourth shaft 34. In this manner, the fourth shaft 34 rotates together with the second planetary carrier 37, and thus the third rotor 830 rotates in synchronization with the second planetary carrier 37.

The gear ratio of the first planetary gear mechanism 16 and the gear ratio of the second planetary gear mechanism 17 are set to be equal. In the case of the present embodiment, the gear ratio of the first planetary gear mechanism 16 and the gear ratio of the second planetary gear mechanism 17 are both set to be one-third. The gear ratio (the reduction ratio) of the first planetary gear mechanism 16 is expressed by $Z1 / (Z1 + Z2)$, where $Z1$ is the number of teeth of the first sun gear 20 and $Z2$ is the number of teeth of the first inner gear 23. The gear ratio (the reduction ratio) of the second planetary gear mechanism 17 is expressed by $Z3 / (Z3 + Z4)$, where $Z3$ is the number of teeth of the second sun gear 45 and $Z4$ is the number of teeth of the second inner gear 38.

When the gear ratios of the first planetary gear mechanism 16 and the second planetary gear mechanism 17 are both one-third, the angular velocity $\omega 1$ of the first shaft 18, the angular velocity $\omega 2$ of the second shaft 19, the angular velocity $\omega 3$ of the third shaft 33, the angular velocity $\omega 4$ of the four shafts 34, and the angular velocity $\omega 5$ of the inner gears (the first inner gear 23 and the second inner gear 38) satisfy the following relations of (Expression 1) and (Expression 2). Hereinafter, the expression 1 and the expression 2 may be collectively referred to as "speed relational expressions". In addition, for the sake of simplification, the value of the rotating speed is directly replaced with the value of the angular speed for calculation in the explanation of the action to be described later.

$$\omega 1 = 3 \times \omega 2 - 2 \times \omega 5 \quad \text{(Expression 1)}$$

$$\omega 3 = 3 \times \omega 4 - 2 \times \omega 5 \quad \text{(Expression 2)}$$

When the gear ratio of the planetary gear mechanisms (the first planetary gear mechanism 151 and the second planetary gear mechanism 152) is changed, the speed relational expressions (the expression 1 and the expression 2) are changed corresponding to the change.

Next, the first driving-force transmission portion 13, the second driving-force transmission portion 14, and the third driving-force transmission portion 15 which are included in the combined planetary gear mechanism mentioned above will be explained below.

The first driving-force transmission portion 13 transmits at least one of the driving force of the first motor 111 and the driving force of the second motor 112.

As shown in FIG. 5, the first driving-force transmission portion 13 is constituted of a part of the components of the combined planetary gear mechanism (the first planetary gear mechanism 16 and the second inner gear 38), the first mechanism 24, and the second mechanism 29.

The first driving-force transmission portion 13 includes a driving-force switch portion 39.

The driving-force switch portion 39 blocks transmission of the driving-force to the third rotor 830 when the rotating speeds of the first motor 111 and the second motor 112 are the same, and transmits the driving force to the third rotor 830 when the rotating speeds of the first motor 111 and the second motor 112 are different.

The driving-force switch portion 39 is constituted of the first planetary gear mechanism 16 (the first sun gear 20, the first planetary gear 21, the first planetary carrier 22, and the first inner gear 23) and the second inner gear 38 of the second planetary gear mechanism 17 from among the components of the first driving-force transmission portion 13.

The gear ratio of the first planetary gear mechanism 16 is set to be equal to the ratio between the rotating speed of the first sun gear 20 that is rotated by the driving of the first motor 111 and the rotating speed of the first planetary carrier 22 that is rotated by the driving of the second motor 112. For example, when the rotating speed of the first sun gear 20 is 3000 rpm and the rotating speed of the first planetary carrier 22 is 1000 rpm, the gear ratio (the reduction ratio) of the first planetary gear mechanism 16 is set to one-third.

The second driving-force transmission portion 14 is connected to the third motor 113 and transmits the driving force of the third motor 113.

As shown in FIG. 5, the second driving-force transmission portion 14 is constituted of the second sun gear 35 and the third shaft 33 from among the components of the above-described combined planetary gear mechanism. The third shaft 33 is connected to the rotation shaft of the third motor 113.

The third driving-force transmission portion 15 transmits at least one of the driving force of the first driving-force transmission portion 13 and the driving force of the second driving-force transmission portion 14.

As shown in FIG. 5, the third driving-force transmission portion 15 is constituted of the second planetary gear 36, the second planetary carrier 37, and the fourth shaft 34 from among the components of the above-described combined planetary gear mechanism.

Hereinafter, based on the operations (actions) of the first mechanism 24, the second mechanism 29, the first driving-force transmission portion 13, the second driving-force transmission portion 14, and the third driving-force transmission portion 15 described above, the driving-force transmission mechanism 12 according to the first embodiment is described.

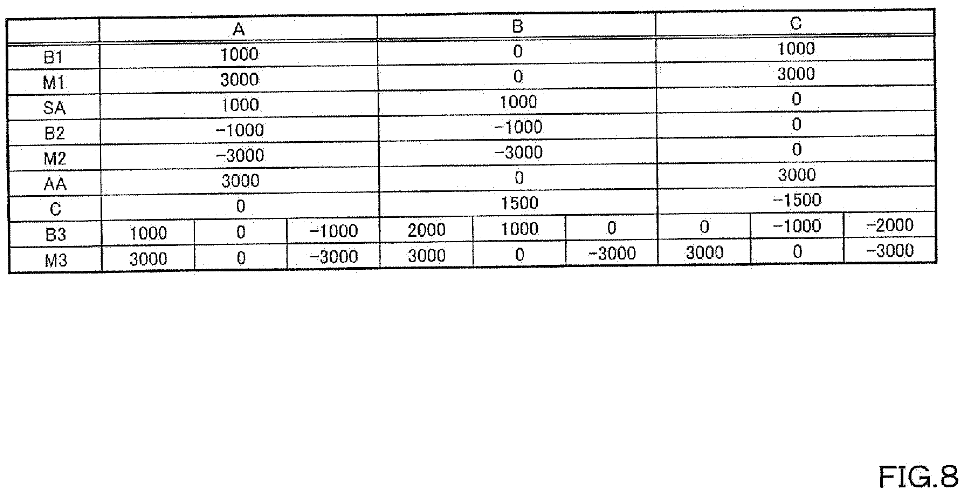

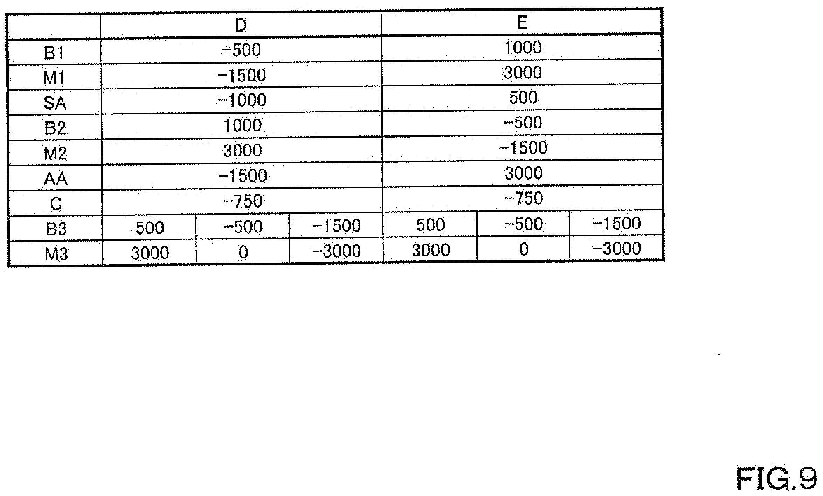

FIG. 8 and FIG. 9 collectively show, in a table format, a plurality of examples of operation patterns of the driving-force transmission portion 12 according to the first embodiment. FIG. 8 and FIG. 9 show a table which shows an example of the relation between the rotating speed (M1) of the first motor 111, the rotating speed (M2) of the second motor 112, the rotating speed (M3) of the third motor 113, the rotating speed (B1) of the first rotor 810, the rotating speed (B2) of the second rotor 820, the rotating speed (B3) of the third rotor 830, the rotating speed (AA) of the first shaft 18, the rotating speed (SA) of the second shaft 19, and the rotating speed (C) of the inner gears (the first inner gear 23 and the second inner gear 38). The example is an example of a case where the gear ratio of the planetary gear mechanism (the first planetary gear mechanism 16 and the second planetary gear mechanism 17) is one-third. In this example, the unit of numerical values in the table is "revolving per minute" (rpm).

In FIG. 8, the row A shows a case where the third motor 113 is driven or stopped under a state where the first motor 111 and the second motor 112 are driven at the same speed. The row B shows a case where the third motor 113 is driven or stopped under a state where the first motor 111 is stopped and the second motor 112 is driven. The row C shows a case where the third motor 113 is driven or stopped under a state where the first motor 111 is driven and the second motor 112 is stopped.

In FIG. 9, the row D shows a case where the third motor 113 is driven or stopped under a state where the second motor 112 is driven at a faster speed than the first motor 111. The row E shows a case where the third motor 113 is driven or stopped under a state where the first motor 111 is driven at a higher speed than the second motor 112.

The operation of the driving-force transmission mechanism 12 according to the first embodiment will be described below with reference to FIG. 5, FIG. 8, and FIG. 9 as appropriate.

First, the operations (actions) of the first mechanism 24, the second mechanism 29, the first driving-force transmission portion 13, the second driving-force transmission portion 14, and the third driving-force transmission portion 15 constituting the driving-force transmission mechanism 12 according to the first embodiment will be described in turn.

In the following description of the operation, the difference in the rotation direction is expressed by using a plus (+) sign and a minus (-) sign in displaying the rotating speed (number of rotations). For example, when the first motor 111 rotates in the forward direction at 3000 rpm, the same rotating speed (number of rotations) in the reverse direction opposite to the first motor 111 is described as "-3000 rpm".

Next, operations (actions) of the first mechanism 24 and the second mechanism 29 will be described.

When the second gear 26 rotates in the forward direction at a first rotating speed (for example, 3000 rpm) due to the driving of the first motor 111, the third gear 27 rotates in the reverse direction at the first rotating speed, and the first gear 25 and the first shaft 18 rotate in the forward direction at a first rotating speed (for example, 3000 rpm). That is, the driving force of the first motor 111 is transmitted to the first shaft 18 through the first mechanism 24. The rotation direction and rotating speed of the rotation shaft of the first motor 111 are the same as the rotation direction and rotating speed of the first shaft 18. That is, the gear ratio of the first mechanism 24 is "1".

When the fourth gear 30 rotates in the reverse direction at the second rotating speed (for example, -3000 rpm) due to the driving of the second motor 112, the fifth gear 31 rotates in the forward direction at a third rotating speed smaller than the second rotating speed (for example, 1000 pm), and the first planetary carrier 22 rotates in the forward direction at the third rotating speed. That is, the driving force of the second motor 112 is transmitted to the second shaft 19 through the second mechanism 29. The rotation direction of the second shaft 19 is the same as the rotation direction of the rotation shaft of the second motor 112, and the rotating speed of the second shaft 19 is smaller than the rotating speed of the second motor 112.

Next, the operation (action) of the first driving-force transmission portion 13 will be described below.

When the first motor 111 is driven, the driving force of the first motor 111 is transmitted to the first shaft 18 through the first mechanism 24, and then rotates the first sun gear 20 of the first planetary gear mechanism 16. That is, when the first motor 111 is driven, the driving force of the first motor 111 is transmitted to the first driving-force transmission portion 13.

When the second motor 112 is driven, the driving force of the second motor 112 is transmitted to the second shaft 19 through the second mechanism 29, and then rotates the first planetary carrier 22 of the first planetary gear mechanism 16. That is, when the second motor 112 is driven, the driving force of the second motor 112 is transmitted to the first driving-force transmission portion 13.

As described above, the first driving-force transmission portion 13 transmits the driving force of the first motor 111 when the first motor 111 is driven, and transmits the driving force of the second motor 112 when the second motor 112 is driven. In addition, when the first motor 111 and the second motor 112 are driven, the driving forces of the first motor 111 and the second motor 112 are transmitted. That is, the first driving-force transmission portion 13 transmits at least one of the driving force of the first motor 111 and the driving force of the second motor 112.

The operation (action) of the driving-force switch portion 39 included in the first driving-force transmission portion 13 will be described below.

First, a case where the rotating speeds of the first motor 111 and the second motor 112 are the same (hereinafter referred to as a "first case") will be described. Note that the phrase "the rotating speeds are the same" means that the absolute values of the rotating speeds are the same. Here, a case where the rotating speed (number of rotation) of the first motor 111 is 3000 rpm and the rotating speed of the second motor 112 is -3000 rpm (corresponding to the row A in FIG. 8) will be described.

When the first motor 111 rotates at 3000 rpm (M1 = 3000), this rotational driving force is transmitted to the first shaft 18 through the first mechanism 24. Since the gear ratio of the first mechanism 24 is "1", the first shaft 18 and the first sun gear 20 rotate at the same 3000 rpm as in the first motor 111 (AA = 3000).

When the second motor 112 rotates at -3000 rpm (M2 = -3000), this rotational driving force is transmitted to the second shaft 19 through the second mechanism 29 as a rotational driving force in the reverse direction. Since the speed ratio of the second mechanism 19 is one-third, the second shaft 19 and the first planetary carrier 22 rotate at 1000 rpm (SA = 1000).

As described above, when the first shaft 18 rotates at 3000 rpm and the second shaft 19 rotates at 1000 rpm, $3000 = 3 \times 1000 - 2 \times \omega5$ is satisfied in the above (Expression 1), and thus $\omega5 = 0$. The first inner gear 23 does not rotate (C = 0). That is, since the gear ratio of the first planetary gear mechanism 16 is set to be equal to the ratio between the rotating speed of the first sun gear 20 and the rotating speed of the first planetary carrier 22 (a ratio between the rotating speeds of the first shaft 18 and the second shaft 19), the first inner gear 23 does not rotate even when the first sun gear 2 and the first planetary carrier 22 rotate.

Thus, when the rotating speed of the first motor 111 and the rotating speed of the second motor 112 are the same, the first inner gear 23 does not rotate. Thus, the second inner gear 38 integrated with the first inner gear 23 also does not rotate, and the second planetary gear 36 that is engaged with the second inner gear 38 in addition does not rotate. In this manner, the second planetary carrier 37 does not rotate, and the third rotor 830 also does not rotate. That is, the transmission of driving force to the third rotor 830 is blocked.

Next, a case where there is a difference between the rotating speed of the first motor 111 and the rotating speed of the second motor 112 (hereinafter referred to as a "second case") will be described below. Here, the case where the rotating speed of the first motor 111 is -1500 rpm and the rotating speed of the second motor 112 is 3000 rpm (corresponding to the row D in FIG. 9) will be described.

When the first motor 111 rotates at -1500 rpm (M1 = -1500), this rotational driving force is transmitted to the first shaft 18 through the first mechanism 24. Since the gear ratio of the first mechanism 24 is "1", the first shaft 18 and the first sun gear 20 rotate at -1500 rpm, which is the same as the first motor 111 (AA = -1500).

When the second motor 112 rotates at 3000 rpm (M2 = 3000), this rotational driving force is transmitted to the second shaft 19 through the second mechanism 29 as a rotational driving force in the reverse direction. In the present embodiment, since the gear ratio (the reduction ratio) of the second reduction gear 32 is one-third, the second shaft 19 and the first planetary carrier 22 rotate at -1000 rpm (SA = -1000).

As described above, when the first shaft 18 rotates at -1500 rpm and the second shaft 19 rotates at -1000 rpm, $-1500 = 3 \times (-1000) - 2 \times \omega5$ is satisfied in the above-mentioned expression 1, and thus $\omega5 = -750$. That is, the first inner gear 23 rotates at -750 rpm (C = -750).

Thus, when there is a difference between the rotating speed of the first motor 111 and the rotating speed of the second motor 112, the first inner gear 23 rotates. Thus, the second inner gear 38 integrated with the first inner gear 23 also rotates, and the second planetary gear 36 that is engaged with the second inner gear 38 also rotates. In this manner, the second planetary carrier 37 rotates, and the third rotor 830 also rotates. That is, the driving force is transmitted to the third rotor 830.

As described above, the driving-force switch portion 39 of the first driving-force transmission portion 13 blocks the transmission of driving force to the third rotor 830 when the rotating speeds of the first motor 111 and the second motor 112 are the same, and when there is a difference between the rotating speeds of the first motor 111 and the second motor 112, the driving force is transmitted to the third rotor 830.

Next, the operation (action) of the second driving-force transmission portion 14 will be described below.

When the third motor 113 is driven, the driving force of the third motor 113 is transmitted to the third shaft 33 and the second sun gear 35. That is, when the third motor 113 is driven, the driving force of the third motor 113 is transmitted to the second driving-force transmission portion 14. In other words, the driving force of the third motor 113 is transmitted to the second driving-force transmission portion 14.

The operation (action) of the third driving-force transmission portion 15 will be described below.

First, a case where only the driving force of the first driving-force transmission portion 13 is transmitted to the third driving-force transmission portion 15 (hereinafter referred to as a "third case") will be described below.

As described above, when there is a difference between the rotating speed of the first motor 111 of the first driving-force transmission portion 13 and the rotating speed of the second motor 112 (the "second case" mentioned above), the first inner gear 23 and the second inner gear 38 rotate. When the second inner gear 38 rotates, the second planetary gear 36 that is engaged with the second inner gear 38 rotates, and the second planetary carrier 37 also rotates. That is, the driving force of the first driving-force transmission portion 13 is transmitted to the third driving-force transmission portion 15. Here, when the driving of the third motor 113 stops, the driving force of the second driving-force transmission portion 14 is not transmitted to the third driving-force transmission portion 15. That is, only the driving force of the first driving-force transmission portion 13 is transmitted to the third driving-force transmission portion 15.

Next, a case where only the driving force of the second driving-force transmission portion 14 is transmitted to the third driving-force transmission portion 15 (hereinafter referred to as a "fourth case") will be described below.

When the third motor 113 is driven, the second sun gear 35 rotates, and this rotational driving force is transmitted to the second planetary gear 36. Thus, the driving force of the second driving-force transmission portion 14 is transmitted to the third driving-force transmission portion 15. Here, when the rotating speed of the first motor 111 of the first driving-force transmission portion 13 and the rotating speed of the second motor 112 are the same, the second planetary gear 36 and the second planetary carrier 37 do not rotate. Thus, the driving force of the first driving-force transmission portion 13 is not transmitted to the third driving-force transmission portion 15. That is, only the driving force of the second driving-force transmission portion 14 is transmitted to the third driving-force transmission portion 15.

A case where both the driving force of the first driving-force transmission portion 13 and the driving force of the second driving-force transmission portion 14 are transmitted to the third driving-force transmission portion 15 (hereinafter referred to as a "fifth case") will be described below.

When there is a difference between the rotating speed of the first motor 111 and the rotating speed of the second motor 112 of the first driving-force transmission portion 13 and in addition when the third motor 113 is driven, the driving force of the first driving-force transmission portion 13 and the driving force of the second transmission portion 14 both are transmitted to the third driving-force transmission portion 15.

That is, the driving force of the first driving-force transmission portion 13 is transmitted to the third driving-force transmission portion 15 by generating a difference between the rotating speed of the first motor 111 and the rotating speed of the second motor 112 of the first driving-force transmission portion 13. In addition, the driving force of the second driving-force transmission portion 14 is transmitted to the third driving-force transmission portion 15 by driving the third motor 113.

In the case where there is a difference in the rotating speed between the first motor 111 and the second motor 112, the driving-force transmission mechanism 12 causes the third rotor 830 to be driven in different driving-force transmission manners depending on whether the third motor 113 is driven or not.

First, the operation of the driving-force transmission mechanism 12 in the case where there is a difference in the rotating speed between the first motor 111 and the second motor 112 and where the third motor 113 is not driven (corresponding to the "third case") will be described.

In this case, the driving-force transmission mechanism 12 drives the third rotor 830 based on the difference between the rotating speeds (rotation numbers) between the first motor 111 and the second motor 112, that is, a value obtained by subtracting "the rotating speed of the second motor 112" from "the rotating speed of the first motor 111". In this case, the difference between the rotating speeds of the first motor 111 and the second motor 112 is calculated as a difference between the absolute values of the rotating speeds (not considering whether the forward rotation and the reverse rotation).

As a specific example (hereinafter also referred to as a "representative example"), a case where the planetary gear mechanism (the first planetary gear mechanism 16 and the second planetary gear mechanism 17) has a gear ratio of one-third, where the rotating speed of the first motor 111 is 3000 rpm, where the rotating speed of the second motor 112 is -1500 rpm, and where the third motor 113 is stopped (corresponding to the row E (B3 and M3 are the center row) in FIG. 9) will be described. In this case, the difference in the rotating speed between the first motor 111 and the second motor 112 (difference in absolute value) is 1500 rpm.

When the first motor 111 rotates at 3000 rpm (M1 = 3000), this rotational driving force is transmitted to the first shaft 18 through the first mechanism 24. Since the gear ratio of the first mechanism 24 is "1", the first shaft 18 and the first sun gear 20 rotate at the 3000 rpm same as the rotating speed of the first motor 111 (AA = 3000).

When the second motor 112 rotates at -1500 rpm (M2 = -1500), this rotational driving force is transmitted to the second shaft 19 through the second mechanism 29 as the rotational driving force in the reverse direction. In the present embodiment, since the gear ratio (the reduction ratio) of the second reduction gear 32 is one-third, the second shaft 19 and the first planetary carrier 22 rotate at 500 rpm (SA = 500).

When the first shaft 18 rotates at 3000 rpm and the second shaft 19 rotates at 500 rpm, $\omega1 = 3000$ and $\omega2 = 500$ in the expression 1 mentioned above, and thus $\omega5 = -750$. That is, the first inner gear 23 and the second inner gear 38 rotate at -750 rpm (C = -750). Since the third motor 113 is not driven (M3 = 0), $\omega3 = 0$ and $\omega5 = -750$ in the expression 2 mentioned above, and thus $\omega4 = -500$. That is, the fourth shaft 34 and the second planetary carrier 37 rotate at -500 rpm. In this manner, the third rotor 830 rotates at -500 rpm (B3 = -500).

As described above, when the difference in the rotating speed between the first motor 111 and the second motor 112 is 1500 rpm, the third rotor 830 rotates at -500 rpm. In addition, the rotation direction of the third rotor 830 is opposite to the rotation direction of faster one of the rotating speeds of the first motor 111 and the second motor 112 (the first motor 111).

Next, a case where the difference in the rotating speed between the first motor 111 and the second motor 112 is increased will be described below. Here, a case where the rotating speed of the first motor 111 is zero (stopped) and the rotating speed of the second motor 112 is -3000 rpm (corresponding to the row B in FIG. 8) will be described. In this case, the difference in the rotating speed between the first motor 111 and the second motor 112 is 3000 rpm.

When the rotating speed of the first motor 111 is zero (M1 = 0), the rotating speeds of the first shaft 18 and the first sun gear 20 are also zero (AA = 0). When the rotating speed of the second motor 112 is -3000 rpm (M2 = -3000), the second shaft 19 and the first planetary carrier 22 rotate at 1000 rpm (SA = 1000).

When the rotating speed of the first shaft 18 is zero and the second shaft 19 rotates at 1000 rpm, $\omega1 = 0$ and $\omega2 = 1000$ in the expression 1 mentioned above, and thus $\omega5 = 1500$. That is, the first inner gear 23 and the second inner gear 38 rotate at 1500 rpm (C = 1500). Since the third motor 113 is not driven (M3 = 0), $\omega3 = 0$ and $\omega5 = 1500$ in the expression 2 mentioned above, and thus $\omega4 = 1000$. That is, the fourth shaft 34 and the second planetary carrier 37 rotate at 1000 rpm. In this manner, the third rotator 830 rotates at 1000 rpm (B3 = 1000).

As described above, when the difference in the rotating speed between the first motor 111 and the second motor 112 is 3000 rpm, the third rotor 830 rotates at 1000 rpm. In addition, the rotation direction of the third rotor 830 is opposite to the rotation direction of faster one of the rotating speeds of the first motor 111 and the second motor 112 (the second motor 112).

Next, a case where the difference in the rotating speed between the first motor 111 and the second motor 112 is reduced will be described. Here, a case where the rotating speed of the first motor 111 is 3000 rpm and the rotating speed of the second motor 112 is -2100 rpm will be described. In this case, the difference in the rotating speed between the first motor 111 and the second motor 112 is 900 rpm.

When the first motor 111 rotates at 3000 rpm, the first shaft 18 and the first sun gear 20 rotate at the 3000 rpm same as the rotating speed of the first motor 111.

When the second motor 112 rotates at -2100 rpm, this rotational driving force is transmitted to the second shaft 19 as the rotational driving force in the reverse direction through the second mechanism 29. In the case of this embodiment, since the gear ratio (the reduction ratio) of the second reduction gear 32 is one-third, the second shaft 19 and the first planetary carrier 22 rotate at 700 rpm.

When the first shaft 18 rotates at 3000 rpm and the second shaft 19 rotates at 700 rpm, $\omega1 = 3000$ and $\omega2 = 700$ in the expression 1 mentioned above, and thus $\omega5 = -450$. That is, the first inner gear 23 and the second inner gear 38 rotate at -450 rpm. Since the third motor 113 is not driven, $\omega3 = 0$, $\omega5 = -450$ in the expression 2 mentioned above, and thus $\omega4 = -300$. That is, the fourth shaft 34 and the second planetary carrier 37 rotate at -300 rpm. In this manner, the third rotor 830 rotates at -300 rpm.

As described above, when the difference in the rotating speed between the first motor 111 and the second motor 112 is 900 rpm, the third rotor 830 rotates at -300 rpm. In addition, the rotation direction of the third rotor 830 is opposite to the rotation direction of faster one of the rotating speeds of the first motor 111 and the second motor 112 (the first motor 111).

As described above, the driving-force transmission portion 12 changes the rotating speed of the third rotor 830 in response to the changing of the difference in the rotating speed between the first motor 111 and the second motor 112. In particular, when the difference in the rotating speed between the first motor 111 and the second motor 112 increases, the rotating speed of the third rotor 830 is increased. In addition, when the difference in the rotating speed between the first motor 111 and the second motor 112 decreases, the rotating speed of the third rotor 830 is decreased.

In addition, when there is a difference in the rotating speed between the first motor 111 and the second motor 112 and further when the third motor 113 is not driven, the rotation direction of the third rotor 830 is opposite to the rotation direction of faster one of the rotating speeds of the first motor 111 and the second motor 112. That is, the driving-force transmission portion 12 determines the rotation direction of the third rotor 830 based on the magnitudes of the rotating speeds of the first motor 111 and the second motor 112.

Next, the operation of the driving-force transmission mechanism 12 in a case where there is a difference in the rotating speed between the first motor 111 and the second motor 112 and further when the third motor 113 is driven (corresponding to the "fifth case") will be explained.

In this case, the driving-force transmission mechanism 12 drives the third rotor 830 based on the difference between the rotating speed of the third motor 113 and the difference in the rotating speed between the first motor 111 and the second motor 112, that is, a value obtained in the expression "(the rotating speed of the first motor 111 - the rotating speed of the second motor 112) - (the rotating speed of the third motor 113)".

Also in this case, the difference in the rotating speed between the first motor 111 and the second motor 112 is compared between the absolute values of the rotating speeds (not considering whether the forward rotation or the reverse rotation). However, when calculating the expression "(the rotating speed of the first motor 111 - the rotating speed of the second motor 112) - (the rotating speed of the third motor 113)", the rotational direction of the third motor 113 is taken into consideration. That is, according to the rotation direction of the third motor 113, the calculation is performed with a "+" sign or a "-" sign. For example, when the first motor 111 rotates at 3000 rpm and further when the third motor 113 rotates at the same speed in the direction same as that of the first motor 111, the rotating speed of the third motor 113 is calculated as "3000 rpm". When the third motor 113 rotates at the same speed in the direction opposite to that of the first motor 111, the rotating speed of the third motor 13 is calculated as "-3000 rpm".

As a specific example, a case where the planetary gear mechanism (the first planetary gear mechanism 16 and the second planetary gear mechanism 17) has a gear ratio of one-third, the first motor 111 is driven at a rotating speed of 3000 rpm, the second motor 112 is driven at a rotating speed of -1500 rpm, and the third motor 113 is driven at a rotating speed of 3000 rpm (corresponding to the row E in FIG. 9 (B3 and M3 are the left row)) will be described. In this case, the difference in the rotating speed between the first motor 111 and the second motor 112 (M1-M2) is 1500 rpm. The difference [(M1-M2) -M3] between (the difference in the rotating speed between the first motor 111 and the second motor 112) and (the rotating speed of the third motor 113) is 1500 rpm-3000 rpm = -1500 rpm.

In this case, as in the case of the "representative example", the first shaft 18 rotates at 3000 rpm (AA = 3000), the second shaft 19 rotates at 500 rpm, and the first inner gear 23 and the second inner gear 38 are rotated at -750 rpm (C = -750).

Here, since the third motor 113 is driven at 3000 rpm, $\omega3 = 3000$ and $\omega5 = -750$ in the expression 2 mentioned above, and thus $\omega4 = 500$. That is, the fourth shaft 34 and the second planetary carrier 37 rotate at 500 rpm. In this manner, the third rotor 830 rotates at 500 rpm (B3 = 500).

As described above, when [the difference between (the difference in the rotating speed between the first motor 111 and the second motor 112) and (the rotating speed of the third motor 113)] is -1500 rpm, the third rotor 830 rotates at 500 rpm.

Next, consider a case where [the difference between (the difference in the rotating speed between the first motor 111 and the second motor 112) and (the rotating speed of the third motor 113)] is increased. For example, a case where the rotating speed of the first motor 111 is 3000 rpm, the rotating speed of the second motor 112 is -1500 rpm, and the rotating speed of the third motor 113 is -3000 rpm (corresponding to the row E in FIG. 9 (B3 and M3 are right rows) will be considered. In this case, the difference in the rotating speed between the first motor 111 and the second motor 112 (M1-M2) is 1500 rpm. The difference [(M1-M2) -M3] between (the difference in the rotating speed between the first motor 111 and the second motor 112) and (the rotating speed of the third motor 113) is 1500 rpm - (- 3000 rpm) = 4500 rpm.

In this case, as in the third case, the first shaft 18 rotates at 3000 rpm (AA = 3000), the second shaft 19 rotates at 500 rpm (SA = 500), and the first inner gear 23 and the second inner gear 38 rotates at -750 rpm (C = -750).

Here, the third motor 113 is driven at -3000 rpm (M3 = -3000), and thus assuming that $\omega 3$ = -3000 and $\omega 5$ = -750 in the expressing 2 mentioned above, $\omega 4$ = -1500. That is, the fourth shaft 34 and the second planetary carrier 37 rotate at -1500 rpm. In this manner, the third rotor 830 rotates at -1500 rpm (B3 = -1500).

As described above, when [the difference between (the difference in the rotating speed between the first motor 111 and the second motor 112) and (the rotating speed of the third motor 113)] is 4500 rpm, the third rotor 830 rotates at -1500 rpm.

Next, consider a case where [the difference between (the difference in the rotating speed between the first motor 111 and the second motor 112) and (the rotating speed of the third motor 113)] is decreased. For example, a case where the rotating speed of the first motor 111 is 3000 rpm, the rotating speed of the second motor 112 is -1500 rpm, and the rotating speed of the third motor 113 is 1500 rpm will be considered. In this case, the difference in the rotating speed between the first motor 111 and the second motor 112 is 1500 rpm. The difference between (the difference in the rotating speed between the first motor 111 and the second motor 112) and (the rotating speed of the third motor 113) is 1500 rpm - 1500 rpm = 0 rpm.

In this case, as in the above "representative example", the first shaft 18 rotates at 3000 rpm, the second shaft 19 rotates at 500 rpm, and the first inner gear 23 and the second inner gear 38 rotate at -750 rpm.

Here, since the third motor 113 is driven at 1500 rpm, $\omega 3$ = 1500 and $\omega 5$ = -750 in the expression 2 mentioned above, and thus $\omega 4$ = 0. That is, the fourth shaft 34 and the second planetary carrier 37 do not rotate. In this manner, the third rotary body 830 also does not rotate.

That is, when [the difference between (the difference in the rotating speed between the first motor 111 and the second motor 112) and (the rotating speed of the third motor 113)] is 0, the rotating speed of the third rotor 830 is zero (not rotating).

As described above, the driving-force transmission portion 12 changes the rotating speed of the third rotor 830 based on [the difference between (the difference in the rotating speed between the first motor 111 and the second motor 112) and (the rotating speed of the third motor 113)]. In particular, when [the difference between (the difference in the rotating speed between the first motor 111 and the second motor 112) and (the rotating speed of the third motor 113)] increases, the rotating speed of the body 830 is increased. In addition, when [the difference between (the difference in the rotating speed between the first motor 111 and the second motor 112) and (the rotating speed of the third motor 113)] decreases, the rotating speed of the third rotor 830 is decreased.

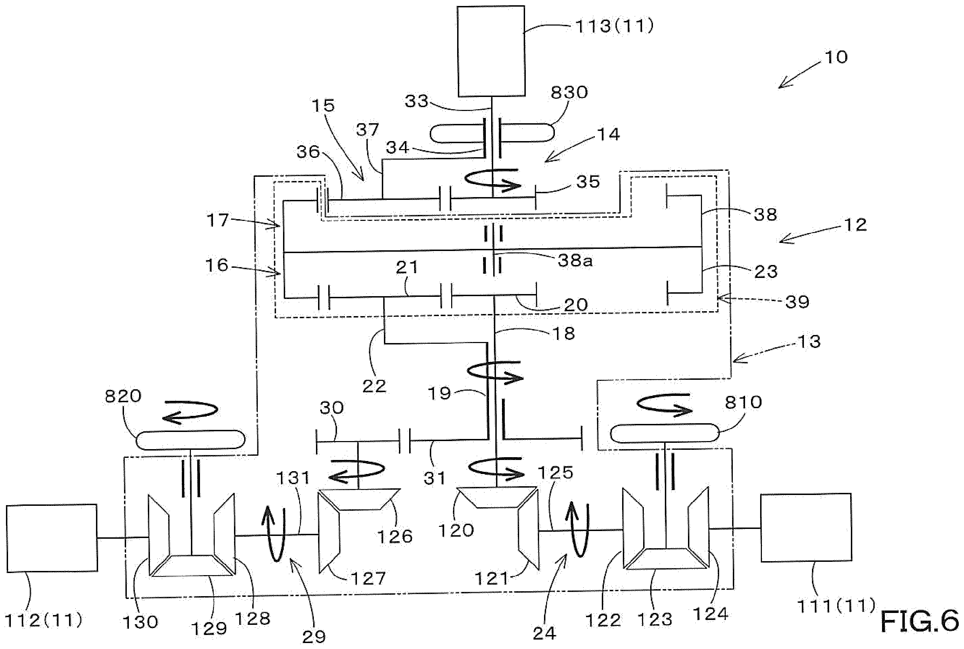

FIG. 6 shows the driver portion 10 including the driving-force transmission mechanism 12 according to the second embodiment.

Similarly to the driving-force transmission mechanism 12 according to the first embodiment, the driving-force transmission mechanism 12 according to the second embodiment is configured to transmit, to the third rotor 830, at least one of the driving force of the first motor 111 and the driving force of the second motor 112. The driving-force transmission mechanism 12 according to the second embodiment includes the combined planetary gear mechanism (the first planetary gear mechanism 16 and the second planetary gear mechanism 17) same as that of the driving-force transmission mechanism 12 according to the first embodiment.

The driving-force transmission mechanism 12 according to the second embodiment will be described focusing on points different from the driving-force transmission mechanism according to the first embodiment. Components similar to the components of the driving-force transmission mechanism according to the first embodiment are denoted by the same reference numerals and description thereof is omitted.

The driving-force transmission mechanism 12 according to the second embodiment includes the first driving-force transmission portion 13, the second driving-force transmission portion 14, and the third driving-force transmission portion 15. The configurations of the second driving-force transmission portion 14 and the third driving-force transmission portion 15 are the same as the configurations of the driving-force transmission mechanism according to the first embodiment, and the configuration of the first driving-force transmission portion 13 is different from the configuration of the driving-force transmission mechanism of the first embodiment.

The configuration of the first driving-force transmission portion 13 according to of second embodiment is demonstrated.

The first driving-force transmission portion 13 is constituted of a part of the components of the combined planetary gear mechanism (the first planetary gear mechanism 16, the second inner gear 38, the first shaft 18, the second shaft 19), the first mechanism 24, the second mechanism 29. Among the components of the first driving-force transmission portion 13, the configurations of the first mechanism 24 and the second mechanism 29 are different from the configuration of the driving-force transmission mechanism according to the first embodiment.

The first mechanism 24 includes a sixth gear 120, a seventh gear 121, an eighth gear 122, a ninth gear 123, a tenth gear 124, and a first coupling shaft 125. The gears constituting the first mechanism 24 (the sixth gear 120 to the tenth gear 124) are all bevel gears.

The sixth gear 120 is coupled to the other end side of the first shaft 18. The seventh gear 121 is engaged with the sixth gear 120. The direction of the rotation axis of the seventh gear 121 intersects with the direction of the rotation axis of the sixth gear 120. The first coupling shaft 125 connects between the center of the seventh gear 121 and the center of the eighth gear 122. In this manner, the seventh gear 121 and the eighth gear 122 rotate integrally. The ninth gear 123 is engaged with the eighth gear 122. The direction of the rotation axis of the ninth gear 123 intersects with the direction of the rotation axis of the eighth gear 122. The tenth gear 124 is engaged with the ninth gear 123. The direction of the rotation axis of the tenth gear 124 intersects with the direction of the rotation axis of the ninth gear 123. The center of the ninth gear 123 is connected to the center axis of the first rotor 810. The center of the tenth gear 124 is connected to the rotation shaft of the first motor 111. In the present embodiment (the second embodiment), the sixth gear 120 and the seventh gear 121 have the same number of teeth, the ratio between the number of teeth of the eighth gear 122 and the number of teeth of the ninth gear 123, and the ratio between the number of teeth of the tenth gear 124 and the number of teeth of the ninth gear 123 are all set to 1: 3.

The second mechanism 29 includes an eleventh gear 126, a twelfth gear 127, a thirteenth gear 128, a fourteenth gear 129, a fifteenth gear 130, and a second coupling shaft 131. The gears constituting the second mechanism 29 (the eleventh gear 126 to the fifteenth gear 130) are all bevel gears.

The eleventh gear 126 is connected to the other end side of the second shaft 19 through the fourth gear 30 and the fifth gear 31. The twelfth gear 127 is engaged with the eleventh gear 126. The direction of the rotation axis of the twelfth gear 127 intersects with the direction of the rotation axis of the eleventh gear 126. The second coupling shaft 131 connects between the center of the twelfth gear 127 and the center of the thirteenth gear 128. In this manner, the twelfth gear 127 and the thirteenth gear 128 rotate integrally. The fourteenth gear 129 is engaged with the thirteenth gear 128. The direction of the rotation axis of the fourteenth gear 129 intersects with the direction of the rotation axis of the thirteenth gear 128. The fifteenth gear 130 is engaged with the fourteenth gear 129. The direction of the rotation axis of the fifteenth gear 130 intersects with the direction of the rotation axis of the fourteenth gear 129. The center of the fourteenth gear 129 is connected to the center axis of the second rotor 820. The center of the fifteenth gear 130 is connected to the rotation shaft of the second motor 112. In the present embodiment (the second embodiment), the number of teeth of the eleventh gear 126 and the twelfth gear 127 is the same, the ratio between the number of teeth of the thirteenth gear 128 and the number of teeth of the fourteenth gear 129, and the ration between the number of teeth of the fifteenth gear 130 and the number of teeth of the fourteenth gear 129 are all set to 1: 3.

According to the first mechanism 24, when the tenth gear 124 is rotated at the first rotating speed (for example, 3000 rpm) by the driving of the first motor 111, the ninth gear 123 and the first rotor 810 are rotated at the second rotating speed (for example, 1000 rpm). When the ninth gear 123 rotates at the second rotating speed, the eighth gear 122 and the seventh gear 121 rotate at the first rotating speed, and the sixth gear 120 and the first shaft 18 rotate at the first rotating speed. That is, the driving force of the first motor 111 is transmitted to the first shaft 18 via the first mechanism 24.

According to the second mechanism 29, when the fifteenth gear 130 is rotated at the first rotating speed (for example, -3000 rpm) by the driving of the second motor 112, the fourteenth gear 129 and the second rotor 820 are rotated at the second rotating speed (for example, -1000 rpm). When the fourteenth gear 129 rotates at the second rotating speed, the thirteenth gear 128 and the twelfth gear 127 rotate at the first rotating speed, and the eleventh gear 127 and the second shaft 19 rotate at the first rotating speed. That is, the driving force of the second motor 112 is transmitted to the second shaft 19 through the second mechanism 29. The rotating speed of the second motor 112 is the same as the rotating speed of the second shaft 19.

When the first motor 111 is driven, the driving force of the first motor 111 is transmitted to the first shaft 18 through the first mechanism 24, and thus rotates the first sun gear 20 of the first planetary gear mechanism 16. That is, when the first motor 111 is driven, the driving force of the first motor 111 is transmitted to the first driving-force transmission portion 13.

When the second motor 112 is driven, the driving force of the second motor 112 is transmitted to the second shaft 19 through the second mechanism 29, and the first planetary carrier 22 of the first planetary gear mechanism 16 is rotated. That is, when the second motor 112 is driven, the driving force of the second motor 112 is transmitted to the first driving-force transmission portion 13.

As described above, the first driving-force transmission portion 13 transmits the driving force of the first motor 111 when the first motor 111 is driven, and transmits the driving force of the second motor 112 when the second motor 112 is driven. In addition, when the first motor 111 and the second motor 112 are driven, the driving forces of the first motor 111 and the second motor 112 is transmitted. That is, the first driving-force transmission portion 13 transmits the driving force of at least one of the driving force of the first motor 111 and the driving force of the second motor 112.

The other configurations of the first driving-force transmission portion 13 (the driving-force switch portion 39 and the like) and the configurations of the second driving-force transmission portion 14 and the third driving-force transmission portion 15 are the same as those of the driving-force transmission mechanism according to the first embodiment. The descriptions thereof are omitted.

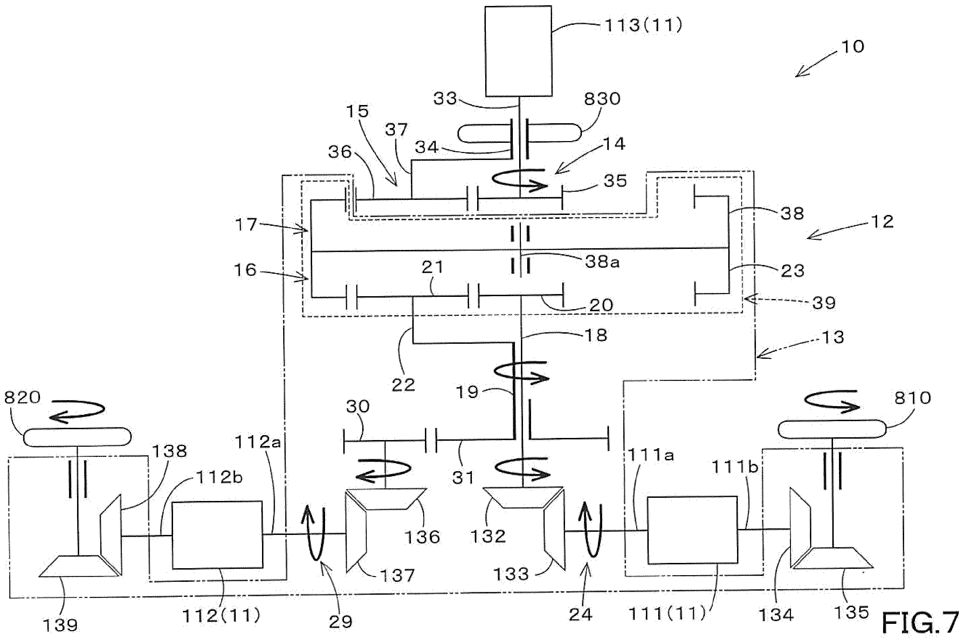

FIG. 7 shows the driver portion 10 including the driving-force transmission mechanism 12 according to a third embodiment of the present invention.

Similar to the driving-force transmission mechanism 12 according to the first embodiment, the driving-force transmission mechanism 12 according to the third embodiment transmits, to the third rotor 830, at least one of the driving force of the first motor 111 and the driving force of the second motor 112. The driving-force transmission mechanism 12 according to the third embodiment also includes the combined planetary gear mechanism (the first planetary gear mechanism 16 and the second planetary gear mechanism 17) same as the driving-force transmission mechanism 12 according to the first embodiment.

The driving-force transmission mechanism 12 according to the third embodiment will be described focusing on differences from the driving-force transmission mechanism according to the first embodiment. The configurations common to the configurations of the driving-force transmission mechanism according to the first embodiment are denoted by the same reference numerals, and the descriptions thereof are omitted.

The driving-force transmission mechanism 12 according to the third embodiment includes the first driving-force transmission portion 13, the second driving-force transmission portion 14, and the third driving-force transmission portion 15. The configurations of the second driving-force transmission portion 14 and the third driving-force transmission portion 15 are the same as the driving-force transmission mechanisms according to the first embodiment and the second embodiment, and the configuration of the first driving-force transmission portion 13 is different from the driving-force transmission mechanisms according to the first embodiment and the second embodiment.

The configuration of the first driving-force transmission portion 13 according to the third embodiment will be described below.

The first driving-force transmission portion 13 is constituted of a part of the components of the combined planetary gear mechanism (the first planetary gear mechanism 16, the second inner gear 38, the first shaft 18, the second shaft 19), the first mechanism 24, and the second mechanism 29. Among the components of the first driving-force transmission portion 13, the configurations of the first mechanism 24 and the second mechanism 29 are different from the driving-force transmission mechanisms according to the first embodiment and the second embodiment.

The first mechanism 24 includes a sixteenth gear 132, a seventeenth gear 133, an eighteenth gear 134, and a nineteenth gear 135. The gears constituting the first mechanism 24 (the sixteenth gear 132 to the nineteenth gear 135) are all bevel gears.

The sixteenth gear 132 is connected to the other end side of the first shaft 18. The seventeenth gear 133 is engaged with the sixteenth gear 132. The direction of the rotation axis of the seventeenth gear 133 intersects with the direction of the rotation axis of the sixteenth gear 132. The first motor 111 has two rotation shafts (a first rotation shaft 111a and a second rotation shaft 111b) extending in opposite directions. The first rotation shaft 111a and the second rotation shaft 111b rotate in the same direction at the same speed. The center of the seventeenth gear 133 is connected to the first rotation shaft 111a of the first motor 111. The second rotation shaft 111b of the first motor 111 is connected to the center of the eighteenth gear 134. The nineteenth gear 135 is engaged with the eighteenth gear 134. The direction of the rotation axis of the nineteenth gear 135 intersects with the direction of the rotation axis of the eighteenth gear 134. The center of the nineteenth gear 135 is connected to the center axis of the first rotor 810. In the present embodiment (the third embodiment), the number of teeth of the sixteenth gear 132 and the number of teeth of the seventeenth gear 133 is the same, and the ratio between the number of teeth of the eighteenth gear 134 and the number of teeth of the nineteenth gear 135 is set to be 1: 3.

The second mechanism 29 includes a twentieth gear 136, a twenty-first gear 137, a twenty-second gear 138, and a twenty-third gear 139. The gears constituting the second mechanism 29 (the twentieth gear 136 to the twenty-third gear 139) are all bevel gears.

The twentieth gear 136 is connected to the other end side of the second shaft 19 through the fourth gear 30 and the fifth gear 31. The twenty-first gear 137 is engaged with the twentieth gear 136. The direction of the rotation axis of the twenty-first gear 137 intersects with the direction of the rotation axis of the twentieth gear 136. The second motor 112 has two rotation shafts (the first rotation shaft 112a and the second rotation shaft 112b) extending in opposite directions. The first rotation shaft 112a and the second rotation shaft 112b rotate in the same direction at the same speed. The center of the twenty-first gear 137 is connected to the first rotation shaft 112a of the second motor 112. The second rotation shaft 112b of the second motor 112 is connected to the center of the twenty-second gear 138. The twenty-third gear 139 is engaged with the twenty-second gear 138. The direction of the rotation axis of the twenty-third gear 139 intersects with the direction of the rotation axis of the twenty-second gear 138. The center of the twenty-third gear 139 is connected to the center shaft of the second rotor 820. In the present embodiment (the third embodiment), the twentieth gear 136 and the twenty-first gear 137 have the same number of teeth, and the ratio between the number of teeth of the twenty-second gear 138 and the number of teeth of the twenty-third gear 139 is set to be 1: 3.

According to the first mechanism 24, when the eighteenth gear 134 rotates at the first rotating speed (for example, 3000 rpm) by the driving of the second rotation shaft 111b of the first motor 111, the nineteenth gear 135 and the first rotor 810 rotate at the second rotating speed (for example, 1000 rpm). When the seventeenth gear 133 rotates at the first rotating speed by the driving of the first rotation shaft 111a of the first motor 111, the sixteenth gear 132 and the first shaft 18 rotate at the first rotating speed. That is, the driving force of the first motor 111 is transmitted to the first shaft 18 through the first mechanism 24.

According to the second mechanism 29, when the twenty-second gear 138 is rotated at the first rotating speed (for example, 3000 rpm) by the driving of the second rotation shaft 112b of the second motor 112, the twenty-third gear 139 and the second rotor 820 rotate at the second rotating speed (for example, 1000 rpm). When the twenty-first gear 137 is rotated at the first rotating speed by the driving of the first rotation shaft 111a of the second motor 112, the twentieth gear 136 and the second shaft 19 rotate at the first rotating speed. That is, the driving force of the second motor 112 is transmitted to the second shaft 19 through the second mechanism 29.

When the first motor 111 is driven, the driving force of the first motor 111 is transmitted to the first shaft 18 through via the first mechanism 24, and thus rotates the first sun gear 20 of the first planetary gear mechanism 16. That is, when the first motor 111 is driven, the driving force of the first motor 111 is transmitted to the first driving-force transmission portion 13.

When the second motor 112 is driven, the driving force of the second motor 112 is transmitted to the second shaft 19 through the second mechanism 29, and thus rotates the first planetary carrier 22 of the first planetary gear mechanism 16. That is, when the second motor 112 is driven, the driving force of the second motor 112 is transmitted to the first driving-force transmission portion 13.

As described above, the first driving-force transmission portion 13 transmits the driving force of the first motor 111 when the first motor 111 is driven, and transmits the driving force of the second motor 112 when the second motor 112 is driven. In addition, when the first motor 111 and the second motor 112 are driven, the driving forces of the first motor 111 and the second motor 112 are transmitted. That is, the first driving-force transmission portion 13 transmits at least one of the driving force of the first motor 111 and the driving force of the second motor 112.

The other configurations of the first driving-force transmission portion 13 (the driving-force switch portion 39 and the like) and the configurations of the second driving-force transmission portion 14 and the third driving-force transmission portion 15 are the same as those of the driving-force transmission mechanism according to the first embodiment. The description thereof is omitted.

According to the driving-force transmission mechanisms 12 according to the first embodiment to the third embodiment described above, the first rotor 830, the second rotor 820, and the third rotor 830 can be rotated by the driving of the first motor 111, the second motor 112, and the third motor 113.

In addition, by making a difference between the rotating speed of the first motor 111 and the rotating speed of the second motor 112, the third rotor 830 can be rotated even when the third motor 113 is stopped (or the second sun gear 35 is fixed). Thus, the rotating speed of the third rotor 830 can be adjusted by changing the difference in the rotating speed between the first motor 111 and the second motor 112 without driving the third motor 113. In this manner, the spreading distances of the three spreader portions (the first spreader portion 81, the second spreader portion 82, and the third spreader portion 82) can be easily uniformed.

In addition, by driving the third motor 113 under the state where the rotating speed of the first motor 111 and the rotating speed of the second motor 112 are different, the third rotor 830 can be driven based on the difference between the rotating speed of the third motor 113 and the difference in the rotating speed between the first motor and the second motor. That is, by driving the third motor 113, the rotating speed of the third rotor 830 can be adjusted more finely in comparison with a case where the third motor 113 is not driven. In this manner, the spreading distances of the three spreader portions (the first spreader portion 81, the second spreader portion 82, and the third spreader portion 82) can be easily uniformed.

In addition, when the rotation of the third rotor 830 is stopped (the second planetary carrier 37 is fixed) and the third motor 113 is driven, the driving force of the third motor 113 can be added to the driving force for driving the first rotor 810 and the second rotor 820. Thus, compared to the case where the first rotor 810 and the second rotor 820 are rotated only by the driving forces of the first motor 111 and the second motor 112, the spreading distances by the first rotor 810 and the second rotor 820 can be extended. In addition, the loads on the first motor 111 and the second motor 112 can be reduced.

In addition, when the rotating speeds of the first motor 111 and the second motor 112 are the same, the driving-force switch portion 39 of the first driving-force transmission portion 13 cuts off the driving-force transmission to the third rotor 113, and when there is a difference in the rotating speed between the first motor 111 and the second motor 112, the driving-force can be transmitted to the third rotor 113. That is, by changing the rotating speeds of the first motor 111 and the second motor 112, the transmission of driving force from the first driving-force transmission portion 13 to the third rotor 113 can be allowed or blocked.

The configuration of the driving-force transmission mechanism 12 is not limited to the configurations according to the first embodiment to the third embodiment described above, and other configurations may be employed.

For example, the third motor 113 can be omitted in the driving-force transmission mechanisms 12 according to the first embodiment to the third embodiment. As described above, even if the third motor 113 is not provided, the third rotor 830 can be rotated by making a difference in the rotating speed between the first motor 111 and the second motor 112.

In addition, in the first mechanism 24 and the second mechanism 29 included in the driving-force transmission mechanism 12, a belt mechanism or a chain mechanism may be employed instead of the gear mechanism.

In the driving-force transmission mechanism 12 described above, the first rotor 810, the second rotor 820, and the third rotor 830 are configured to operate (rotate) in synchronization with each other. However, the first body 810, the second rotor 820, and the third rotor 830 may be configured to operate (rotate) independently from each other.

In addition, a clutch configured to allow or block the linkage between the first rotor 810, the second rotor 820, and the third rotor 830 may be provided.

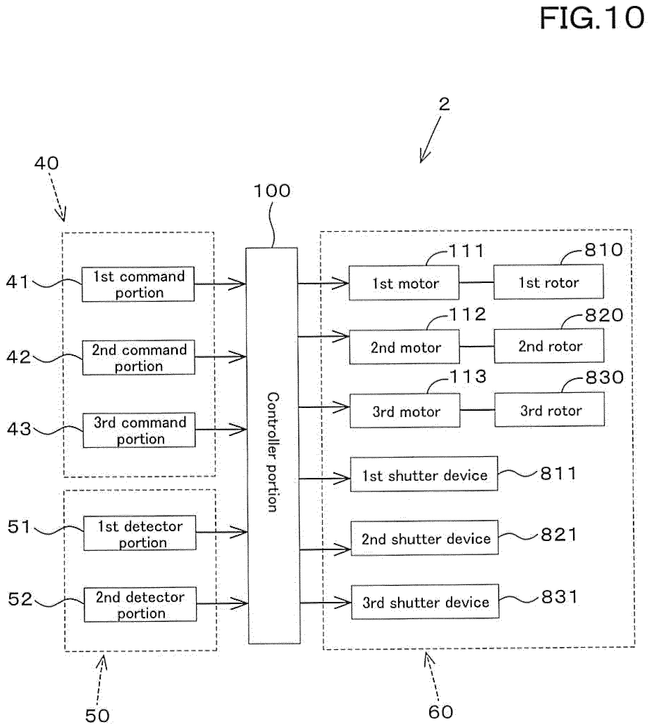

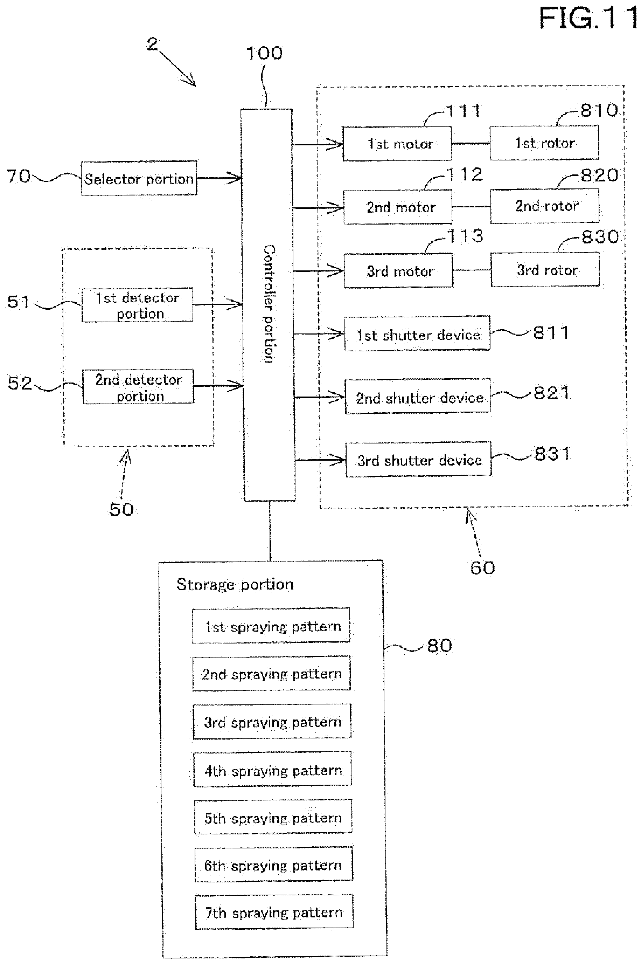

As shown in FIG. 10 and 11, the spreader device 2 includes a controller portion 100.

The controller portion 100 is constituted of a CPU and the like. The controller portion 100 can be provided, for example, to any location (for example, to the frame 9) of the main body of the spreader device 2 (the container portion 7, the spreader portion 8, the frame 9, and the driver portion 10). In addition, the control part 100 may be provided to the location separating from the main body of the spreader device 2. The controller portion 100 can be provided, for example, in the tractor (the traveling vehicle) 3 when provided to a position separating away from the main body of the spreader device 2. In addition, the controller portion 100 may be provided in the spreader device 2 and may operate integrally with the controller portion provided in the tractor 3.

The controller portion 100 controls the operation of the motor (the first motor 111, the second motor 112, the third motor 113) and the operation of the shutter device (the first shutter device 811, the second shutter device 821, the third shutter device 831).

A control system (a controller system) including the controller portion 100 will be described below.

FIG. 10 is a block diagram showing a control system including the controller portion 100a according to the first embodiment.

In the control system according to the first embodiment, the controller portion 100 is connected to the command portion 40, the detector portion (a sensor) 50, and the output portion 60 so as to be communicable (can transmit signals) through a bus.

The controller portion 100 controls the driving of the output portion 60 based on an input signal based on a command (inputting) from the command portion 40 and based on a detection signal from the detector portion 50. The output portion 60 includes the motors (the first motor 111, the second motor 112, the third motor 113) and the shutter devices (the first shutter device 811, the second shutter device 821, the third shutter device 831).

The command portion 40 may be provided in the main body of the spreader device 2 or may be provided at a position (for example, the tractor 3 or the like) separating away from the main body of the spreader device 2. The command portion 40 is constituted of, for example, switches (a push button, a dial, a lever, and the like) provided around the operator seat 4 and in the frame 9 and the like. The command portion 40 includes a first command portion 41, a second command portion 42, and a third command portion 43. The first command portion 41 commands the driving of the first motor 111 and the first shutter device 811. The second command portion 42 commands the driving of the second motor 112 and the second shutter device 821. The third command portion 43 commands the driving of the third motor 113 and the third shutter device 831.

A command portion for commanding the driving of the motors (first motor 111, second motor 112, and third motor 113) and a command portion for commanding the driving of the shutter devices (the first shutter device 811, the second shutter device 821, and the third shutter device 831) may be provided. However, a case where a command portion configured in one is provided will be described.

The controller portion 100 drives the first motor 111 and the first shutter device 811 based on an instruction from the first command portion 41, drives the second motor 112 and the second shutter device 821 based on an instruction from the second command portion 42, and drives the third motor 113 and the third shutter device 831 based on an instruction from the third command portion 43.

In particular, when the first command portion 41 is operated (for example, a push button is pushed), an input signal from the first command portion 41 is transmitted to the controller portion 100, and the controller portion 100 drives the first motor 111 and the first shutter device 811 based on the input signal. In this manner, the shutter of the first shutter device 811 moves to open the first take-out outlet 71, and the first rotor 810 rotates.

When the second command portion 42 is operated, an input signal from the second command portion 42 is transmitted to the controller portion 100, and the controller portion 100 drives the second motor 112 and the second shutter device 821 based on the input signal. In this manner, the shutter of the second shutter device 821 moves to open the second take-out outlet 72, and the second rotor 820 rotates.

When the third command portion 43 is operated, an input signal from the third command portion 43 is transmitted to the controller portion 100, and the controller portion 100 drives the third motor 113 and the third shutter device 831 based on the input signal. In this manner, the shutter of the third shutter device 831 moves to open the third outlet 73, and the third rotor 830 rotates.

In the present embodiment, by selecting any one of the first command portion 41, the second command portion 42, and the third command portion 43 and operating the selected one, any one of the first rotor 810, the second rotor 820, and the third rotor 830 can be selected to be rotated. In addition, any one of the first shutter device 811, the second shutter device 821, and the third shutter device 831 can be selected and driven.

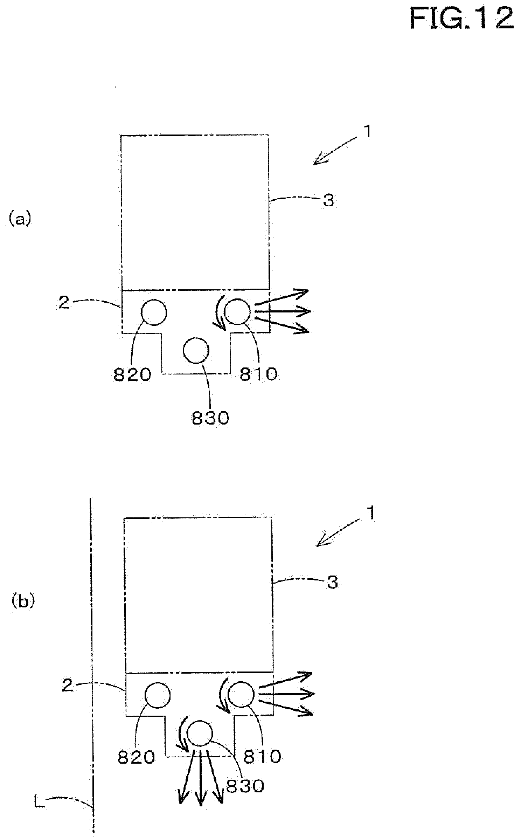

Thus, for example, when it is desired to spread the spread substance to the right of the tractor 3, the shutter of the first shutter device 811 is opened when the first command portion 41 is operated, and the first rotor 810 rotates. In this manner, as shown to FIG. 12 (a), the spread substance can be spread mainly to the right of the tractor 3. In addition, when it is desired to spread the spread substance to the right and the rear of the tractor 3, the shutters of the first shutter device 811 and the third shutter device 831 are opened when the first command portion 41 and the third command portion 42 are operated, the first rotator 810 and the third rotator 830 rotate. In this manner, as shown in FIG. 12 (b), the spread substance can be spread mainly to the right and the rear of the tractor 3. In this manner, as shown in FIG. 12 (b), it is possible to avoid spreading the spread substance beyond the boundary line L when the tractor 3 performs the spreading while traveling in the vicinity of the boundary line L of the agricultural field. The boundary line L is, for example, a line indicating the edge of the agricultural field (a boundary line with a road, a boundary line with a building, a boundary line with another person's field, and the like), a boundary line between different crops, or the like. Thus, in the embodiment, it is possible to spread in the optimum direction considering the shape of the agricultural field, the position of the tractor 3, the position of the crops, and the like.

In addition, it is preferred that the first command portion 41 is configured to command to change the rotating speed of the first motor 111 and/or the opening aperture of the shutter of the first shutter device 811 (the opening aperture of the first take-out outlet 71). It is preferred that the second command portion 42 is configured to command to change the rotating speed of the second motor 112 and/or the opening aperture of the shutter of the second shutter device 821 (the opening aperture of the second take-out outlet 72). It is preferred that the third command portion 43 is configured to command to change the rotating speed of the third motor 113 and/or the opening aperture of the shutter of the third shutter device 831 (the opening aperture of the third take-out outlet 73). In this case, the controller portion 100 changes the rotating speed of the motor and/or the opening aperture of the shutter of the shutter device based on the commands (the inputs) from the first command portion 41, the second command portion 42, and the third command portion 43.

The controller portion 100 may be configured to independently control the first motor 111, the second motor 112, and the third motor 113, or may be configured to synchronously control at least two (two or three) of the first motor 112, the second motor 112, and the third motor 113.

In the case where the first motor 111, the second motor 112, and the third motor 113 are controlled independently, the first rotor 810, the second rotor 820, and the third rotor 830 are independently driven or stopped, and thus the rotating speeds and the rotation directions can be changed independently. In this manner, it is possible to easily change the spreading pattern and make the spreading uniform.

In the case where at least two of the first motor 112, the second motor 112, and the third motor 113 are synchronously controlled, the first motor 112 and the second motor 112 may be interlocked so as to have the same rotating speed, for example. In addition, the first motor 112, the second motor 112, and the third motor 113 can be interlocked so as to have the same rotating speed. In addition, when the rotating speed of one of the first motor 112 and the second motor 112 is increased, the other one can be interlocked so that the rotating speed decreases. In addition, when the difference in the rotating speed between the first motor 111 and the second motor 112 increases, the rotating speed of the third motor 113 can be increased or decreased. By performing such interlocking control, it is possible to easily change the spreading pattern and make the spreading uniform without individually controlling (adjusting) the driving of the first motor 111, the second motor 112, and the third motor 113.

The detector portion 50 includes a first detector portion 51 and a second detector portion 52.

The first detector portion 51 is a speed sensor configured to detect the speed (the vehicle speed) of the tractor 3. The first detector portion 51 may be provided to the position (for example, the tractor 3) separating away from the main body of the spreader device 2, and may be provided to the main body of the spreader device 2.

The controller portion 100 is configured to control the driving of the motors (the first motor 111, the second motor 112, and the third motor 113) based on the speed detected by the first detector portion 51. In addition, the controller portion 100 is configured to control the driving of the shutter devices (the first shutter device 811, the second shutter device 821, and the third shutter device 831) based on the speed detected by the first detector portion 51.

In particular, for example, the rotating speeds of the motors (first motor 111, second motor 112, third motor 113) are controlled to be increased as the speed detected by the first detector portion 51 increases. In addition, as the speed detected by the first detector portion 51 increases, the shutter opening aperture of the shutter devices (the first shutter device 811, the second shutter device 821, and the third shutter device 831) is controlled to be increased. In this manner, when the speed of the tractor 3 is increased, it is possible to prevent the spreading amount of spread substance per unit area from decreasing. That is, even if the speed of the tractor 3 changes, the spreading amount of spread substance per unit area can be made substantially constant.

The second detector portion 52 is a height sensor configured to detect the height (a height from the ground) of at least one of the first rotor 810, the second rotor 820, and the third rotor 830. This height sensor may detect the height of each of the three rotors (the first rotor 810, the second rotor 820, and the third rotor 830), or may detect one or two of the heights of the rotors. As the height sensor, for example, an ultrasonic level sensor, a microwave level sensor, a laser level sensor, or the like can be employed.

The second detector portion 52 may be configured to directly detect the height of the rotors (the first rotor 810, the second rotor 820, the third rotor 830), or may be configured to detect the height of portions other than the rotors (for example, the frame 9, the coupling device 6, or the like), and then indirectly detect the height of the rotor from the difference in height between the portion and the rotor.

The second detector portion 52 is provided on the main body of the spreader device 2 (the frame 9 or the like) when the second detector portion 52 is configured to directly detect the height of the rotor, but the second detector portion 52 may be provided to a position separating from the main body of the spread device 2 (for example, tractor 3) when the second detector portion 52 is configured to indirectly detect the height.

The controller portion 100 is configured to control the driving of the first motor 111, the second motor 112, and the third motor 113 based on the height detected by the second detector portion 52.

In particular, the motors (the first motor 111, the second motor 112, and the third motor 113) can be controlled to increase the rotating speeds as the height detected by the second detector portion 52 decreases. In this manner, when the height of the rotor (the first rotor 810, the second rotor 820, and the third rotor 830) is reduced, it is possible to prevent the spreading distance of the spread substance from decreasing. That is, even if the heights of the rotors (the first rotor 810, the second rotor 820, and the third rotor 830) change, the spreading distance of the spread substance can be made substantially constant.

According to the spreader device 2 having the control system according to the first embodiment described above, the command portion 40 controls the driving of the motor (the first motor 111, the second motor 112, the third motor 113) and the driving of the shutter device (the first shutter device 811, the second shutter device 821, the third shutter device 831), and thereby it is possible to easily set the spreading direction of the spread substance. Thus, an optimal spreading pattern can be set according to the position of the tractor 3 in the agricultural field, the shape of the agricultural field, the distribution of agricultural products, and the like.

FIG. 11 is a block diagram showing the control system including the controller portion 100 according to the second embodiment.

In the control system according to the second embodiment, the controller portion 100 is communicably connected to the selector portion 70, the storage portion 80, the detector portion 50, and the output portion 60 through a bus. That is, the control system according to the second embodiment includes the selector portion 70 and the storage portion 80 instead of the command portion 40 of the control system according to the first embodiment.

The control system according to the second embodiment will be described with respect to differences from the control system according to the first embodiment, and the description of points that are common to the control system according to the first embodiment will be omitted.

In the control system according to the second embodiment, the controller portion 100 is configured to control the driving of the motor (the first motor 111, the second motor 112, the third motor 113) and the shutter device (the first shutter device 811, the second shutter device 821, and the third shutter device 831) based on an input signal inputted from the selector portion 70 or a detection signal from the detector portion 50.

The selector portion 70 may be provided to the main body of the spreader device 2 or may be provided to a position separating away from the main body of the spreader device 2 (for example, the tractor 3 or the like). The selector portion 70 is provided around the operator seat 4 or to the frame 9, for example. The selector portion 70 is constituted of a plurality of switches (a push button, a dial, or the like), a touch panel that displays a plurality of selection menus, or the like. The selector portion 70 is configured to select a desired spreading pattern from a plurality of spreading patterns stored in the storage portion 80 through the operating of the switch or the touch panel.

The storage portion 80 stores a plurality of spreading patterns of spread substance each having different spread areas, operation programs for the motors (the first motor 111, the second motor 112, and the third motor 113) and the shutter devices (the first shutter device 811, the second shutter device 821, and the third shutter device 831) for realizing the spreading patterns. In the example shown in FIG. 11, seven spreading patterns (the first spreading pattern to the seventh spreading pattern) and the operation program for realizing the spreading patterns are stored.

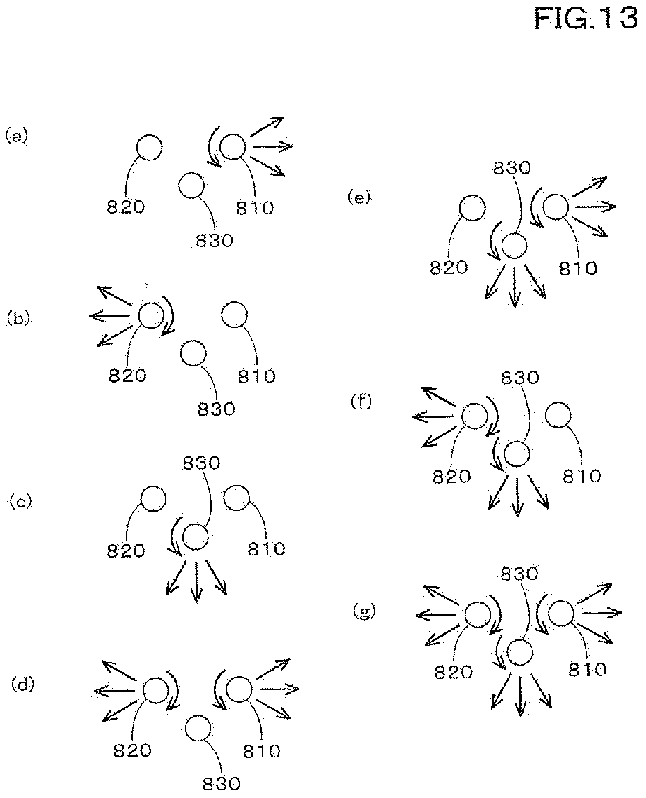

FIG. 13 is a schematic planar view showing examples of the spreading patterns, wherein (a) to (g) are the first spreading pattern to the seventh spreading pattern, respectively. In FIG. 13, the upward direction is the traveling direction (the forward direction) of the tractor 3.

The first spreading pattern shown in FIG. 13 (a) spreads the spread substance mainly to the right of the tractor 3. The second spreading pattern shown in (b) spreads the spread substance mainly to the left of the tractor 3. The third spreading pattern shown in (c) spreads the spread substance mainly to the rear of the tractor 3. The fourth spreading pattern shown in (d) spreads the spread substance mainly to the right and the left of the tractor 3. The fifth spreading pattern shown in (e) spreads the spread substance mainly to the right and the rear of the tractor 3. The sixth spreading pattern shown in (f) spreads the spread substance mainly on the left and the rear of the tractor 3. The seventh spreading pattern shown in (g) spreads the spread substance mainly to the left, the right, and the rear of the tractor 3.

Based on the spreading pattern selected (inputted) by the selector portion 70, the controller portion 100 controls the driving of the motor (the first motor 111, the second motor 112, the third motor 113) and the driving of the shutter device (the first shutter device 811, the second shutter device 821, the third shutter device 831).

In particular, when the selector portion 70 selects the first spreading pattern, the selector portion 70 transmits, to the controller portion 100, an input signal indicating that the first spreading pattern has been selected. The controller portion 100 reads the first spreading pattern stored in the storage portion 80 based on the input signal, and drives the first motor 111 and the first shutter device 811 to realize the first spreading pattern. In this manner, the shutter of the first shutter device 811 moves to open the first take-out outlet 71, and the first rotor 810 rotates. As the result, as shown in FIG. 13 (a), the spread substance is spread mainly to the right of the tractor 3.

When the second spreading pattern is selected by the selector portion 70, the controller portion 100 reads out the second spreading pattern stored in the storage portion 80 based on the input signal from the selector portion 70, and drives the second motor 112 and the second shutter device 821. In this manner, the second take-out outlet 72 is opened, and the second rotor 820 rotates. As the result, as shown in FIG. 13 (b), the spread substance is spread mainly to the left of the tractor 3.

When the selector portion 70 selects the third spreading pattern, the controller portion 100 reads out the third spreading pattern stored in the storage portion 80 based on the input signal from the selector portion 70, and drives the third motor 113 and the third shutter device 831. In this manner, the third take-out outlet 73 is opened, and the third rotor 830 rotates. As the result, as shown in FIG. 13 (c), the spread substance is spread mainly to the rear of the tractor 3.

When the selector portion 70 selects the fourth spreading pattern, the controller portion 100 reads out the fourth spreading pattern stored in the storage portion 80 based on the input signal from the selector portion 70, and drives the first motor 111, the second motor 112, the first shutter device 811, and the second shutter device 821. In this manner, the first take-out outlet 71 and the second take-out outlet 72 are opened, and the first rotor 810 and the second rotor 820 rotate. As the result, as shown in FIG. 13 (d), the spread substance is spread mainly to the right and the left of the tractor 3.

When the selector portion 70 selects the fifth spreading pattern, the controller portion 100 reads out the fifth spreading pattern stored in the storage portion 80 based on the input signal from the selector portion 70, and drives the first motor 111, the third motor 3, the first shutter device 811, and the third shutter device 831. In this manner, the first take-out outlet 71 and the third take-out outlet 73 are opened, and the first rotor 810 and the third rotor 830 rotate. As the result, as shown in FIG. 13 (e), the spread substance is spread mainly to the right and the rear of the tractor 3.

When the selector portion 70 selects the sixth spreading pattern, the controller portion 100 reads out the sixth spreading pattern stored in the storage portion 80 based on the input signal from the selector portion 70, and drives the second motor 112, the third motor 3, the second shutter device 821, and the third shutter device 831. In this manner, the second take-out outlet 72 and the third take-out outlet 73 are opened, and the second rotor 820 and the third rotor 830 rotate. As the result, as shown in FIG. 13 (f), the spread substance is spread mainly to the left and the rear of the tractor 3.

When the selector portion 70 selects the seventh spreading pattern, the controller portion 100 reads out the seventh spreading pattern stored in the storage portion 80 based on the input signal from the selector portion 70, and drives the first motor 111, the second motor 112, the third motor 113, the first shutter device 811, the second shutter device 821, and the third shutter device 831. In this manner, the first tale-out outlet 71, the second take-out outlet 72, and the third take-out outlet 73 are opened, and the first rotor 810, the second rotor 820, and the third rotor 830 rotate. As the result, as shown in FIG. 13 (g), the spread substance is spread to the left, the right, and the rear of the tractor 3.

According to the spreader device 2 having the control system according to the second embodiment described above, the spreading direction of the spread substance can be easily set by selecting the spreading pattern with the selector portion 70. Accordingly, an optimal spreading pattern can be easily set according to the position of the tractor 3 in the agricultural field, the shape of the agricultural field, the distribution of the crops, and the like.

In the above description, the embodiment of the present invention has been explained. However, all the features of the embodiment disclosed in this application should be considered just as examples, and the embodiment does not restrict the present invention accordingly. A scope of the present invention is shown not in the above-described embodiment but in claims, and is intended to include all modifications within and equivalent to a scope of the claims.

For example, in the above-described embodiment, the case where the plurality of driver sources (the first driver source, the second driver source, and the third driver source) are all motors has been described. However, any one of the plurality of driver sources may employ a driver source other than the motor. That is, the motor and a driver source other than the motor may be used in combination. In particular, using the internal combustion engine (an engine) of the traveling vehicle 3 as the driver source, the driving force transmitted from any one of the first motor 111, the second motor 112, and the third motor 113 may be replaced with the driving force transmitted from the internal combustion engine through the PTO shaft.

[DESCRIPTION OF THE REFERENCE NUMERAL]

| | |
|---|---|
| 2 | Spreader device |
| 3 | Traveling vehicle |
| 7 | Container portion |
| 8 | Spreader portion |
| 81 | First spreader portion |
| 82 | Second spreader portion |
| 83 | Third spreader portion |
| 810 | First rotor |
| 820 | second rotor |
| 830 | Third rotor |
| 9 | Attachment portion (Frame) |
| 12 | Driving-force transmission mechanism |
| 13 | First driving-force transmission portion |
| 14 | Second driving-force transmission portion |
| 15 | Third driving-force transmission portion |
| 16 | First planetary gear mechanism (Planetary gear mechanism) |
| 17 | Second planetary gear mechanism (Planetary gear mechanism) |
| 20 | First sun gear |
| 21 | First planetary gear |
| 22 | First planetary carrier |
| 23 | First inner gear |
| 35 | Second sun gear |
| 36 | Second planetary gear |
| 37 | Second planetary carrier |
| 38 | Second inner gear |
| 39 | Driving-force switch portion |
| 40 | Command portion |
| 41 | First command portion |
| 42 | Second command portion |
| 43 | Third command portion |
| 50 | Detector portion (sensor) |
| 51 | First detector portion |
| 52 | Second detector portion |
| 60 | Output portion |
| 70 | Selector portion |
| 80 | Storage portion |
| 100 | Controller portion |
| 111 | First motor (First driver source) |
| 112 | Second motor (Second driver source) |
| 113 | Third motor (Third driver source) |

**Claims**

1. A spreader device (2) comprising:

   a container portion (7) configured to contain spread substance;
   a first spreader portion (81) having a first rotor (810) configured to spread the spread substance contained in the container portion (7);

a second spreader portion (82) having a second rotor (820) configured to spread the spread substance contained in the container portion (7);

a third spreader portion (83) having a third rotor (830) configured to spread the spread substance contained in the container portion (7);

a first driver source (111) configured to drive the first rotor (810);

a second driver source (112) configured to drive the second rotor (820); and

a third driver source (113) configured to drive the third rotor (830),

**characterized in that** the spreader device (2) comprises.

a driving-force transmission mechanism (12) configured to transmit, to the third rotor (830), at least one of a driving force of the first driver source (111) and a driving force of the second driver source (112),

wherein the driving-force transmission mechanism (12) has:

a first driving-force transmission portion (13) to which at least one of the driving-force of the first driver source (111) and the driving-force of the second driver source (112) is transmitted;

a second driving-force transmission portion (14) to which a driving-force of the third driver source (113) is transmitted, the second driving-force transmission portion being connected to the third driver source (113); and

a third driving-force transmission portion (15) to which at least one of the driving-force of the first driving-force transmission portion (13) and the driving-force of the second driving-force transmission portion (14) is transmitted.

2. The spreader device according to claim 1,
wherein the first driving-force transmission portion (13) includes
a driving-force switch portion (39) configured to:

block transmitting the driving-force to the third rotor (830) when a rotating speed of the first driver source (111) is equal to a rotating speed of the second driver source (112); and

transmit the driving-force to the third rotor (830) when the rotating speed of the first driver source (111) is different from the rotating speed of the second driver source (112).

3. The spreader device according to claim 1 or 2,
wherein the driving-force transmission mechanism (12)

drives the third rotor (830) based on a difference between the rotating speed of the first driver source (111) and the rotating speed of the second driver source (112) when the rotating speed of the first driver source (111) is different from the rotating speed of the second driver source (112) and in addition when the third driver source (113) is stopped, and

drives the third rotor (830) based on a difference between (i) a rotating speed of the third driver source (113) and (ii) the difference between the rotating speed of the first driver source (111) and the rotating speed of the second driver source (112) when the rotating speed of the first driver source (111) is different from the rotating speed of the second driver source (112) and in addition when the third driver source (113) is driven.

4. The spreader device according to claim 2,

wherein the driving-force switch portion (39) includes a planetary gear mechanism (16) having:

a first sun gear (20) to which the driving-force of the first driver source (111) is transmitted;

a first planetary gear (21) engaged with the first sun gear;

a first planetary carrier (22) to which the driving-force of the second driver source is transmitted, the first planetary carrier supporting the first planetary gear; and

a first inner gear (23) engaged with the first planetary gear,

and wherein a gear ratio of the planetary gear mechanism is equivalent to a ratio between a rotating speed of the first sun gear (20) rotated by the first driver source (111) and a rotating speed of the first planetary carrier (22) rotated by the second driver source (112).

5. The spreader device according to claim 4,

EP 3 646 693 B1

wherein the driving-force switch portion (39) includes
a second inner gear (38) configured to be rotated integrally with the first inner gear (23),
wherein the third driving-force transmission portion (13) includes:

a second planetary gear (36) engaged with the second inner gear; and
a second planetary carrier (37) supporting the second planetary gear, the second planetary carrier being configured to be rotated integrally with the third rotor (830),

and wherein the second driving-force transmission portion includes
a second sun gear (35) to which the driving-force of the third driver source is transmitted, the second sun gear being engaged with the second planetary gear.


**Patentansprüche**

1. Streuvorrichtung (2), umfassend:

eine Behältersektion (7), die dazu ausgestaltet ist, ein Streumittel zu enthalten,
eine erste Streusektion (81), die einen ersten Rotor (810) aufweist, der dazu ausgestaltet ist, das Streumittel, das in der Behältersektion (7) enthalten ist, zu verstreuen,
eine zweite Streusektion (82), die einen zweiten Rotor (820) aufweist, der dazu ausgestaltet ist, das Streumittel, das in der Behältersektion (7) enthalten ist, zu verstreuen,
eine dritte Streusektion (83), die einen zweiten Rotor (830) aufweist, der dazu ausgestaltet ist, das Streumittel, das in der Behältersektion (7) enthalten ist, zu verstreuen,
eine erste Antriebsquelle (111), die dazu ausgestaltet ist, den ersten Rotor (810) anzutreiben,
eine zweite Antriebsquelle (112), die dazu ausgestaltet ist, den zweiten Rotor (820) anzutreiben, und
eine dritte Antriebsquelle (113), die dazu ausgestaltet ist, den dritten Rotor (830) anzutreiben,

**dadurch gekennzeichnet, dass** die Streuvorrichtung (2) umfasst:

einen Antriebskraft-Übertragungsmechanismus (12), der dazu ausgestaltet ist, mindestens eine von einer Antriebskraft der ersten Antriebsquelle (111) und einer Antriebskraft der zweiten Antriebsquelle (112) auf den dritten Rotor (830) zu übertragen,
wobei der Antriebskraft-Übertragungsmechanismus (12) aufweist:

eine erste Antriebskraft-Übertragungssektion (13), auf welche mindestens eine von der Antriebskraft der ersten Antriebsquelle (111) und der Antriebskraft der zweiten Antriebsquelle (112) übertragen wird,
eine zweite Antriebskraft-Übertragungssektion (14), auf welche eine Antriebskraft der dritten Antriebsquelle (113) übertragen wird, wobei die zweite Antriebskraft-Übertragungssektion mit der dritten Antriebsquelle (113) verbunden ist, und

eine dritte Antriebskraft-Übertragungssektion (15), auf welche mindestens eine von der Antriebskraft der ersten Antriebskraft-Übertragungssektion (13) und der Antriebskraft der zweiten Antriebskraft-Übertragungssektion (14) übertragen wird.

2. Streuvorrichtung nach Anspruch 1,
wobei die erste Antriebskraft-Übertragungssektion (13) beinhaltet
eine Antriebskraft-Schaltsektion (39), die dazu ausgestaltet ist:

die Übertragung der Antriebskraft auf den dritten Rotor (830) zu blockieren, wenn eine Drehgeschwindigkeit der ersten Antriebsquelle (111) gleich einer Drehgeschwindigkeit der zweiten Antriebsquelle (112) ist, und
die Antriebskraft auf den dritten Rotor (830) zu übertragen, wenn sich die Drehgeschwindigkeit der ersten Antriebsquelle (111) von der Drehgeschwindigkeit der zweiten Antriebsquelle (112) unterscheidet.

3. Streuvorrichtung nach Anspruch 1 oder 2,
wobei der Antriebskraft-Übertragungsmechanismus (12)

den dritten Rotor (830) auf der Grundlage einer Differenz zwischen der Drehgeschwindigkeit der ersten An-

24

triebsquelle (111) und der Drehgeschwindigkeit der zweiten Antriebsquelle (112) antreibt, wenn sich die Drehgeschwindigkeit der ersten Antriebsquelle (111) von der Drehgeschwindigkeit der zweiten Antriebsquelle (112) unterscheidet und zusätzlich wenn die dritte Antriebsquelle (113) gestoppt wird, und

den dritten Rotor (830) auf der Grundlage einer Differenz zwischen (i) einer Drehgeschwindigkeit der dritten Antriebsquelle (113) und (ii) der Differenz zwischen der Drehgeschwindigkeit der ersten Antriebsquelle (111) und der Drehgeschwindigkeit der zweiten Antriebsquelle (112) antreibt, wenn sich die Drehgeschwindigkeit der ersten Antriebsquelle (111) von der Drehgeschwindigkeit der zweiten Antriebsquelle (112) unterscheidet und zusätzlich wenn die dritte Antriebsquelle (113) gestoppt wird.

4. Streuvorrichtung nach Anspruch 2,

wobei die Antriebskraft-Schaltsektion (39) einen Planetengetriebemechanismus (16) beinhaltet, der aufweist:

ein erstes Sonnenrad (20), auf welches die Antriebskraft der ersten Antriebsquelle (111) übertragen wird,
ein erstes Planetenrad (21), das mit dem ersten Sonnenrad in Eingriff steht,
einen ersten Planetenträger (22), auf welchen die Antriebskraft der zweiten Antriebsquelle übertragen wird, wobei der erste Planetenträger das erste Planetenrad trägt, und
ein erstes Innenrad (23), das mit dem ersten Planetenrad in Eingriff steht,

und wobei ein Übersetzungsverhältnis des Planetengetriebemechanismus zu einem Verhältnis zwischen einer Drehgeschwindigkeit des ersten Sonnenrades (20), das durch die erste Antriebsquelle (111) gedreht wird, und einer Drehgeschwindigkeit des ersten Planetenträgers (22), der durch die zweite Antriebsquelle (112) gedreht wird, äquivalent ist.

5. Streuvorrichtung nach Anspruch 4,

wobei die Antriebskraft-Schaltsektion (39) beinhaltet:
ein zweites Innenrad (38), das dazu ausgestaltet ist, einteilig mit dem ersten Innenrad (23) gedreht zu werden,
wobei die dritte Antriebskraft-Übertragungssektion (13) beinhaltet:

ein zweites Planetenrad (36), das mit dem zweiten Innenrad in Eingriff steht, und
einen zweiten Planetenträger (37), der das zweite Planetenrad trägt, wobei der zweite Planetenträger dazu ausgestaltet ist, einteilig mit dem dritten Rotor (830) gedreht zu werden,

und wobei die zweite Antriebskraft-Übertragungssektion beinhaltet:
ein zweites Sonnenrad (35), auf welches die Antriebskraft der dritten Antriebsquelle übertragen wird, wobei das zweite Sonnenrad mit dem zweiten Planetenrad in Eingriff steht.

**Revendications**

1. Dispositif épandeur (2) comprenant :

une partie de contenant (7) configurée pour contenir la substance à épandre ;
une première partie d'épandeur (81) ayant un premier rotor (810) configuré pour épandre la substance à épandre contenue dans la partie de contenant (7) ;
une deuxième partie d'épandeur (82) ayant un deuxième rotor (820) configuré pour épandre la substance à épandre contenue dans la partie de contenant (7) ;
une troisième partie d'épandeur (83) ayant un troisième rotor (830) configuré pour épandre la substance à épandre contenue dans la partie de contenant (7) ;
une première source d'entraînement (111) configurée pour entraîner le premier rotor (810) ;
une deuxième source d'entraînement (112) configurée pour entraîner le deuxième rotor (820) ; et
une troisième source d'entraînement (113) configurée pour entraîner le troisième rotor (830),
**caractérisé en ce que** le dispositif épandeur (2) comprend :

un mécanisme de transmission de force d'entraînement (12) configuré pour transmettre, au troisième rotor (830), au moins l'une parmi une force d'entraînement de la première source d'entraînement (111) et une force d'entraînement de la deuxième source d'entraînement (112),

dans lequel le mécanisme de transmission de force d'entraînement (12) a :

une première partie de transmission de force d'entraînement (13) à laquelle au moins l'une parmi la force d'entraînement de la première source d'entraînement (111) et la force d'entraînement de la deuxième source d'entraînement (112) est transmise ;
une deuxième partie de transmission de force d'entraînement (14) à laquelle une force d'entraînement de la troisième source d'entraînement (113) est transmise, la deuxième partie de transmission de force d'entraînement étant raccordée à la troisième source d'entraînement (113) ; et
une troisième partie de transmission de force d'entraînement (15) à laquelle au moins l'une parmi la force d'entraînement de la première partie de transmission de force d'entraînement (13) et la force d'entraînement de la deuxième partie de transmission de force d'entraînement (14) est transmise.

2.  Dispositif épandeur selon la revendication 1,
dans lequel la première partie de transmission de force d'entraînement (13) comprend :
une partie de commutation de force d'entraînement (39) configurée pour :

arrêter la transmission de la force d'entraînement au troisième rotor (830) lorsqu'une vitesse de rotation de la première source d'entraînement (111) est égale à une vitesse de rotation de la deuxième source d'entraînement (112) ; et
transmettre la force d'entraînement au troisième rotor (830) lorsque la vitesse de rotation de la première source d'entraînement (111) est différente de la vitesse de rotation de la deuxième source d'entraînement (112).

3.  Dispositif épandeur selon la revendication 1 ou 2,

dans lequel le mécanisme de transmission de force d'entraînement (12) entraîne le troisième rotor (830) sur la base d'une différence entre la vitesse de rotation de la première source d'entraînement (111) et la vitesse de rotation de la deuxième source d'entraînement (112) lorsque la vitesse de rotation de la première source d'entraînement (111) est différente de la vitesse de rotation de la deuxième source d'entraînement (112) et de plus lorsque la troisième source d'entraînement (113) est arrêtée, et
entraîne le troisième rotor (830) sur la base d'une différence entre (i) une vitesse de rotation de la troisième source d'entraînement (113) et (ii) la différence entre la vitesse de rotation de la première source d'entraînement (111) et la vitesse de rotation de la deuxième source d'entraînement (112) lorsque la vitesse de rotation de la première source d'entraînement (111) est différente de la vitesse de rotation de la deuxième source d'entraînement (112) et de plus lorsque la troisième source d'entraînement (113) est entraînée.

4.  Dispositif épandeur selon la revendication 2,
dans lequel la partie de commutation de force d'entraînement (39) comprend un mécanisme d'engrenage planétaire (16) ayant :

un premier solaire (20) auquel la force d'entraînement de la première source d'entraînement (111) est transmise ;
un premier train planétaire (21) mis en prise avec le premier planétaire ;
un premier porte-satellites (22) auquel la force d'entraînement de la deuxième source d'entraînement est transmise, le premier porte-satellites supportant le premier train planétaire ; et
un premier engrenage interne (23) mis en prise avec le premier train planétaire,
et dans lequel un rapport d'engrenage du mécanisme de train planétaire est équivalent à un rapport entre une vitesse de rotation du premier solaire (20) entraîné en rotation par la première source d'entraînement (111) et une vitesse de rotation du premier porte-satellites (22) entraîné en rotation par la deuxième source d'entraînement (112).

5.  Dispositif épandeur selon la revendication 4,
dans lequel la partie de commutation de force d'entraînement (39) comprend :

un deuxième engrenage interne (38) configuré pour être entraîné en rotation, de manière solidaire, avec le premier engrenage interne (23),
dans lequel la troisième partie de transmission de force d'entraînement (13) comprend :

un deuxième train planétaire (36) mis en prise avec le deuxième engrenage interne ; et
un deuxième porte-satellites (37) supportant le deuxième train planétaire, le deuxième porte-satellites étant configuré pour être entraîné en rotation, de manière solidaire, avec le troisième rotor (830),
et dans lequel la deuxième partie de transmission de force d'entraînement comprend :
un deuxième solaire (35) auquel la force d'entraînement de la troisième source d'entraînement est transmise,
le deuxième planétaire étant mis en prise avec le deuxième train planétaire.

FIG.1

EP 3 646 693 B1

EP 3 646 693 B1

FIG.2

FIG.3

FIG.4

FIG.5

EP 3 646 693 B1

FIG.6

FIG.7

EP 3 646 693 B1

| | A | | | B | | | C | | |
|---|---|---|---|---|---|---|---|---|---|
| B1 | 1000 | | | 0 | | | 1000 | | |
| M1 | 3000 | | | 0 | | | 3000 | | |
| SA | 1000 | | | 1000 | | | 0 | | |
| B2 | −1000 | | | −1000 | | | 0 | | |
| M2 | −3000 | | | −3000 | | | 0 | | |
| AA | 3000 | | | 0 | | | 3000 | | |
| C | 0 | | | 1500 | | | −1500 | | |
| B3 | 1000 | 0 | −1000 | 2000 | 1000 | 0 | 0 | −1000 | −2000 |
| M3 | 3000 | 0 | −3000 | 3000 | 0 | −3000 | 3000 | 0 | −3000 |

FIG.8

| | D | | | E | | |
|---|---|---|---|---|---|---|
| B1 | −500 | | | 1000 | | |
| M1 | −1500 | | | 3000 | | |
| SA | −1000 | | | 500 | | |
| B2 | 1000 | | | −500 | | |
| M2 | 3000 | | | −1500 | | |
| AA | −1500 | | | 3000 | | |
| C | −750 | | | −750 | | |
| B3 | 500 | −500 | −1500 | 500 | −500 | −1500 |
| M3 | 3000 | 0 | −3000 | 3000 | 0 | −3000 |

FIG.9

EP 3 646 693 B1

FIG.10

FIG.11

# FIG.12

(a)

(b)

FIG.13

(a)

820    830    810

(b)

820    830    810

(c)

830

820    810

(d)

820    830    810

(e)

830

820    810

(f)

830

820    810

(g)

830

820    810

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013046601 A
- GB 2150403 A
- EP 0504720 A
- EP 0048465 A